# EUROPEAN PATENT SPECIFICATION

(11) **EP 4 430 530 B1**
(45) Date of publication and mention of the grant of the patent: **01.10.2025**
(21) Application number: 22800849.6
(22) Date of filing: 04.11.2022
(51) Int. Cl.: G06N 10/80, G06F 9/46, H04B 10/70, H04L 9/08

(54) **OPERATING SYSTEM FOR QUANTUM NETWORK NODES AND EXECUTION OF QUANTUM NETWORK APPLICATIONS USING SUCH OPERATING SYSTEM**
BETRIEBSSYSTEM FÜR QUANTENNETZWERKKNOTEN UND AUSFÜHRUNG VON QUANTENNETZWERKANWENDUNGEN MIT EINEM SOLCHEN BETRIEBSSYSTEM
SYSTÈME D'EXPLOITATION POUR NOEUDS DE RÉSEAU QUANTIQUE ET EXÉCUTION D'APPLICATIONS DE RÉSEAU QUANTIQUE UTILISANT UN TEL SYSTÈME D'EXPLOITATION

(30) Priority: 08.11.2021 NL 2029673
(43) Date of publication of application: 18.09.2024
(73) Proprietor: Technische Universiteit Delft, 2628 CN Delft (NL)
(72) Inventor: TE RAA, Ingmar, 2600 AA Delft (NL); DAHLBERG, Erik Axel, 2600 AA Delft (NL); DONNE, Carlo Delle, 2600 AA Delft (NL); VAN DER VECHT, Bart, 2600 AA Delft (NL); KOZLOWSKI, Wojciech, 2600 AA Delft (NL); SKRZYPCZYK, Matthew Daniel, 2600 AA Delft (NL); WEHNER, Stephanie Dorothea Christine, 2600 AA Delft (NL)
(74) Representative: De Vries & Metman
(86) International application number: PCT/NL2022/050625
(87) International publication number: WO 2023/080786

(56) References cited:
- AXEL DAHLBERG ET AL: "A link layer protocol for quantum networks", DATA COMMUNICATION, ACM, 2 PENN PLAZA, SUITE 701NEW YORKNY10121-0701USA, 19 August 2019 (2019-08-19), pages 159 - 173, XP058440118, ISBN: 978-1-4503-5956-6, DOI: 10.1145/3341302.3342070
- XIAOLIANG WU ET AL: "SeQUeNCe: A Customizable Discrete-Event Simulator of Quantum Networks", ARXIV.ORG, CORNELL UNIVERSITY LIBRARY, 201 OLIN LIBRARY CORNELL UNIVERSITY ITHACA, NY 14853, 25 September 2020 (2020-09-25), XP081770613
- ANDREW W CROSS ET AL: "OpenQASM 3: A broader and deeper quantum assembly language", ARXIV.ORG, CORNELL UNIVERSITY LIBRARY, 201 OLIN LIBRARY CORNELL UNIVERSITY ITHACA, NY 14853, 30 April 2021 (2021-04-30), XP081946440
- ANONYMOUS: "Computer multitasking - Wikipedia", 7 February 2017 (2017-02-07), XP055343262, Retrieved from the Internet <URL:https://en.wikipedia.org/wiki/Computer_multitasking> [retrieved on 20170207]

## Description

### Technical field

The embodiments relate to an operating system for a quantum network nodes and execution of quantum network applications using such operating system, and, in particular, though not exclusively, to methods and systems for executing one or more quantum network applications on one or more quantum network nodes forming a quantum network and a software program product using such methods.

### Background

Quantum network architectures are based on quantum devices, i.e. quantum network nodes, that are capable of connecting over large distances in order provide new applications that are impossible to achieve using a classical communication network or that are better (e.g. more secure, more efficient) than their purely classical implementation. Examples of such quantum network applications include security enhancing applications such as quantum key distribution (QKD), improved clock synchronization, support for distributed sensing and distributed systems, as well as secure quantum computing in the cloud. To run a general quantum network application on a quantum network of connected quantum network nodes, the quantum network nodes need to be capable of producing quantum entanglement between quantum end nodes, or in short end nodes. Entanglement is a special property of at least two quantum bits (qubits), one held by each end node. Such entanglement can be consumed by an application as is, or be used to transmit qubits from one end node to the other using teleportation.

Additionally, a quantum network node needs be capable of executing local quantum operations on the qubits held by a quantum network node. For simple quantum applications such as secure communication these operations can be just a single measurement. For more complex quantum network applications at a higher stage of quantum internet development, however, these operations can include the execution of quantum gates and indeed full quantum computation on a quantum processor. Next to such quantum actions, many quantum network applications known to date require significant local classical processing, as well as classical communication between the end nodes Wehner et al, Quantum internet: A vision for the road ahead. Science, 362(6412) :eaam9288, Oct 2018.. Different types of end node hardware has been realized by experimental physics ranging from simple photonic devices on which the only operation is a measurement, to fully fledged quantum processors with a network interface.

Quantum network applications should be distinguished from quantum computing applications Cross, et al. OpenQASM 3: A broader and deeper quantum assembly language. arXiv preprint arXiv:2104.14722, 2021 in which quantum operations are sequentially executed on a hybrid computing systems. Up to now, demonstrations of quantum networking beyond QKD focused on hardware realizations Pompili et al. Realization of a Multinode Quantum Network of Remote Solid-State Qubits. Science 372, no. 6539 (April 16, 2021): 259-64. Up to three quantum processors have been connected into a network at the hardware level, and demonstrations of quantum network applications beyond QKD have been performed using several photonic devices. Central to all these experiments is that the software to control the hardware was programmed in an ad-hoc fashion specific to the experiment into low-level control devices.

In order to advance quantum networks from a physics experiment to a fully-fledged quantum network system, quantum network nodes and an operating system for controlling such quantum network nodes are desired that allow a programmer to realize quantum network applications based on high-level software, and control entanglement generation over long distances in a scalable way. The high-level parts of the software for realizing such quantum network applications need to be platform independent, in order to be able to interact with a variety of potential candidates for future quantum network hardware technology. When designing such quantum network nodes and associated operating system, many challenges and design considerations arise, which can be roughly classified into three areas. A first challenge relates to the fundamental differences between classical and quantum information. A good example of this, is the phenomenon of quantum entanglement, which already at the physical layer forms a "connection" between two qubits held by different nodes. A second challenge relates to the technological limitations of so-called near-term quantum devices impose stringent demands on the performance of such a system. One example of such a limitation are limited lifetimes of quantum memories (microseconds up to seconds for network capable devices), which impose scheduling constraints on the execution of quantum operations. A third challenge relate to the fact that unlike in the study of classical operating systems today which take advantage of the existence of advanced computer architectures defining a specific interaction of software and hardware, there exists no general low-level quantum processor architecture.

Hence, from the above it follows that there is a need in the art for methods and systems for enabling the realization of a programmable quantum network. In particular, there is a need in the art for quantum nodes for a programmable quantum network and an operating system for controlling and programming such quantum nodes.

### Summary

The invention is set out in the appended set of claims. The dependent claims set out particular embodiments. As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FPGAs), System-on-Chip (SoC) or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Hence, the invention relates to executing a quantum network application by an operating system of a quantum network node which is configured to separately process local quantum operations using a first subsystem of the operating system and entanglement generation requests using a second subsystem of the operating system, wherein the entanglement generation requests are processed by the operating system based on a network schedule to coordinate entanglement generation between quantum network nodes.

In an embodiment, the local quantum operations may be part of a user process and the entanglement generation operation by the second subsystem part of a network process. The user process and network process associated with a quantum network application define logical entities that can be scheduled and processed by the operation system of the quantum network node. It provides the ability to implement scheduling policies which can be used to address the issue of scheduling user processes and network processes to optimize fidelity and throughput. The strict separation between local user processes and network processes enable execution of quantum network applications on multiple quantum network nodes of a quantum network through scheduling mechanisms and scheduling policies. Further, the user processes and the network processes can be scheduled such that they can generate entanglement between to quantum network nodes and consume that entanglement as fast as possible to ensure the highest fidelity.

In an embodiment, the preparation of the execution of the first entanglement generation operation may include: sending a request for entanglement over a classical communication link to the second quantum network node; or, receiving a request for entanglement over a classical communication link from the second quantum network node. Hence, a quantum network node may be a node requesting entanglement generation or a node receiving an entanglement generation request from another node.

In an embodiment, the first and second quantum network nodes may be connected to each other via an optical medium, preferably an optical fibre. In this embodiment, entanglement between communication bits of different nodes may be achieved via an optical interface such as an optical fibre.

In an embodiment, the network schedule may include one or more time slots for coordinating entanglement generation between the one or more quantum network nodes.

In an embodiment, the one or more time slots of the network schedule may signal the operating system at what time the second subsystem has access to the quantum hardware of the quantum network node.

In an embodiment, the network schedule may be a time division multiplexing schedule. In another embodiment, the network schedule may be a time-division multiple access TDMA schedule. In yet another embodiment, the network schedule may be statistical multiplexing schedule.

In an embodiment, the network schedule may be used by the operating system to schedule the user process and the network process based on a scheduling policy. In an embodiment, in a scheduling policy, a higher priority network process may take precedence over a lower-priority user process, if the user process and the network process become ready at the same time instance..

In an embodiment, the executing of the entanglement generation operation may include: allocating the ownership of the communication that is used in the entanglement generation to the network process. In another embodiment, the executing the entanglement generation operation may include: transferring ownership of the communication qubit to the user process if entanglement between the communication qubit and a communication qubit of the second quantum network node is established.

Ownership transfer of a qubit from a user process to a network process (or viz versa) may be implemented logically by updating the qubit owner and allocating a new virtual address in the new process' virtual address space rather than physically moving quantum data in the memory in order to minimize fidelity losses due to imperfect hardware operations and additional latency.

In an embodiment, a central network controller may provide the one or more quantum network nodes with a network schedule for coordinating entanglement between the quantum network nodes.

In an embodiment, the quantum network application may include classical code blocks and quantum code blocks wherein the classical code blocks include classical operations of a high-level computer language and wherein the quantum code blocks include quantum operations of a quantum assembly language.

In an embodiment, the quantum assembly language may include one or more operations for entanglement generation.

In an embodiment, the method may further include during the blocking of the execution of the local quantum operations associated with a first quantum network application, executing local quantum operations associated with a second quantum network application or sending a further entanglement generation request associated with a second quantum network application to the second subsystem.

Thus, in contrast to the executing of quantum applications that are executed on a conventional quantum computer which executes programs sequentially, the execution of quantum network applications according to this embodiment, allow multitasking as a quantum network application may have to wait for some classical message exchange to happen between the programs running on different end-nodes to proceed. Such idle time will leave spare capacity that can be potentially used to execute other applications. Such multitasking will lead to increased application throughput when compared to sequential execution without a significant impact on the quantum execution quality.

The execution results may include measurements of one or more qubits or information about a communication qubit that is not measured and stored in the quantum memory. In an embodiment, the execution results may include qubit metadata. For example, in an embodiment, the qubit metadata may include at least part of the qubit metadata that is managed by a quantum memory management unit (QMMU) of the operating system of the quantum network node, such as ownership of a qubit and/or transfer of ownership of a qubit.

In an embodiment, the classical code blocks may include classical operations of a high-level computer language and the quantum code blocks may include quantum operations of a quantum assembly language, preferably quantum assembly language comprising instructions for entanglement generation.

The invention relates to an architecture for a quantum networked operating system that is executed on quantum nodes forming a quantum network. The quantum networked operating system includes methods and systems for quantum memory management, scheduling different types of quantum operations, as well as an interface to different drivers addressing several possible quantum hardware architectures. The quantum networked operation system may be implementation of quantum nodes that use quantum hardware based on Nitrogen-Vacancy Centers in Diamond.

Quantum network applications should be distinguished from quantum computing applications in that a programmer may ask for an arbitrary interleaving of such quantum and classical actions at different quantum network nodes that may depend on each other. Moreover, in order to implement such applications, independent programs may be written for each quantum network node, which only interact with each other by passing classical or quantum messages using e.g. entanglement of qubits. This way, security sensitive network applications may be realized just as in the classical domain, but prohibits a global orchestration of the quantum execution.

As a consequence of the need to for continuous interaction between the classical parts (the classical code blocks) and quantum parts (the quantum code blocks) of a quantum network application, both the classical and quantum state needs to be kept alive, i.e. stored in a quantum memory, such that for example quantum instructions can be executed depending on messages from a remote quantum network node. This is in sharp contrast to conventional quantum computing applications, wherein the quantum part of a program is compiled and sent to the quantum processor to be executed in one batch, concluding in a measurement terminating the quantum execution.

Further, quantum network nodes may be configured as end-nodes or as intermediary nodes, e.g. quantum repeater nodes, in order to generate entanglement between end nodes separated by long distances. Such repeater nodes can be simple automated nodes, or controllable nodes capable of - for example - on demand entanglement generation or higher-level decision making. In the latter case, quantum repeater nodes are capable of executing similar actions as end nodes - without the need to realize universal quantum computation. A typical quantum repeater protocol may include actions such as: producing entanglement with neighbouring repeater nodes, executing a restricted class of local quantum operations, and basic classical communication and computation in order to control entanglement generation. From a hardware perspective, possible realizations of quantum repeaters have been suggested using the same type of quantum processors that are also used for end nodes, or simpler devices not capable of universal quantum computation.

Hence, in that case the invention may relate to a computer-implemented method for executing a quantum repeater application comprising quantum code blocks on one or more quantum network nodes, each quantum network node including classical computer system and a quantum computing system comprising one or more communication qubits and one or more storage qubits, the method comprising:,
executing a quantum code block by an operating system of a first quantum network node, the quantum code block comprising quantum operations, the quantum operations including local quantum operations not related to entanglement generation and at least an entanglement generation operation for entanglement generation between the first quantum network node and a second quantum network node, the first and second quantum network nodes being part of a quantum network;
executing at least part of the quantum operations on the quantum computing system via a first subsystem of the operating system, wherein if a quantum operation is relates to an entanglement generation operation, sending the entanglement generation operation to a second subsystem of the operating system, the second subsystem preparing execution of the entanglement generation operation as a background process of the operating system, while the first subsystem continues executing local quantum operations;
blocking the execution of the local quantum operations associated with a first quantum network application by the first subsystem, if a first local quantum operation requires access to an entanglement associated with the entanglement generation operation;
executing the entanglement generation operation by the second subsystem based on a timeslot in a network schedule provided to the first and second quantum network node, preferably the entanglement generation operation being executed as a kernel process of the operating system;
unblocking execution of the quantum operations by the first subsystem if entanglement between the first and second quantum network node is established; and,
providing the local quantum operation access to a communication qubit of the quantum computing system of the first quantum network node that is entanglement with a communication qubit of the quantum computing system of the second quantum network node.

The invention will be further illustrated with reference to the attached drawings, which schematically will show embodiments according to the invention. It will be understood that the invention is not in any way restricted to these specific embodiments.

### Brief description of the drawings

**Fig. 1** depicts a high-level scheme of a quantum network application executed in a quantum network;
**Fig. 2** depicts a quantum network node according to an embodiment;
**Fig. 3** illustrates the execution of a quantum network application on a quantum network node according to an embodiment;
**Fig. 4** and **4B** illustrate a quantum network and a network schedule for a quantum network according to an embodiment;
**Fig. 5A** and **5B** depict a schematic of quantum network node and an execution model for executing an quantum application on a quantum network node according to an embodiment;
**Fig. 6** depicts an example of an ownership transfer using a quantum memory management unit according to an embodiment;
**Fig. 7A** and **7B** illustrate a user process and the network process according to an embodiment;
**Fig. 8** illustrates the execution of a quantum routine associated with quantum network application according to an embodiment;
**Fig. 9** illustrates the execution of a quantum routine associated with quantum network application according to an embodiment;
**Fig. 10** illustrates the execution of a quantum routine associated with quantum network application according to an embodiment;
**Fig. 11** depicts a schematic of network schedule according to an embodiment;
**Fig. 12** illustrates an example of execution of multiple user processes by a quantum network node operation system according to an embodiment;
**Fig. 13** illustrates another example of execution of multiple user processes by a quantum network node operation system according to an embodiment.
**Fig. 14** depicts a quantum network node system according to an embodiment;
**Fig. 15** depicts a schematic of a quantum network node operating system stack according to an embodiment;
**Fig. 16** depicts a schematic of the core layer of a quantum network node operation system according to an embodiment.

### Description of the embodiments

The embodiments in this disclosure relate to an operating system for a programmable quantum network node. Such operating system will be referred to as a quantum node operating system or in short QNodeOS. Whilst operating systems for quantum computers already exist, introducing quantum communications between quantum network nodes require new challenges in memory and process management for the quantum network nodes. In particular, a quantum node operating system needs to be able to run quantum network applications, while maintaining the quality of the quantum execution in terms of its fidelity. As will be described hereunder in more detail, this problem can be solved through close cooperation between networking, process management and memory management. Although a quantum network protocol stack including a link layer and network layer is known from Dahlberg et al, A link layer protocol for quantum networks, in ACM SIGCOMM 2019 Conference, SIGCOMM '19, page 15, New York, NY, USA, 2019. ACM and Kozlowski, et al, 2020, Designing a quantum network protocol. In Proceedings of the 16th International Conference on emerging Networking Experiments and Technologies (CoNEXT '20). Association for Computing Machinery, New York, NY, USA, 1-16. These schemes assume coexistence within a more advanced software system however do not describe how the protocol stack is integrated with a local resource management nor do they consider any application execution model. Hence, substantial challenges for quantum hardware resource management both on a fundamental and technical level still exist in the prior art.

A first challenge relates to memory management, which is necessarily more complicated on a quantum network node in a quantum network as compared to a single quantum computing node executing only local applications. For example, a quantum network node needs the quantum memory to persist between separate quantum code blocks. In a quantum computer that is not connected to a network, the most optimal quantum memory management strategy is to execute blocks of code in batches such that no quantum memory needs to persist between them. Such strategy is possible in a non-networked scenario as one can include all classical logic within such a block a priori, but not for distributed quantum network applications. Quantum network applications, in general, need to wait, with a live quantum state being held in memory, for classical input from the other node. Even in the simple case of teleportation Bennett, et al. Teleporting an unknown quantum state via dual classical and Einstein-Podolsky-Rosen channels, Physical review letters 70.13 (1993): 1895, the receiver needs to hold its qubit waiting for the two bits of information that will indicate the required Pauli correction. It is not, in general, possible to include all such input a priori. Therefore, a quantum node operating system requires a quantum memory manager that allows for a quantum memory to persist between quantum code blocks of the same application.

A second challenge relates to resource scheduling. Quantum networks will require a lot of coordination between the quantum network nodes. Nodes have finite resources so carefully allocation is desired to execute users' applications. The resource management strategy needs to be coordinated so that end-nodes have access to the right resources at the right time to execute the application successfully and efficiently. Furthermore, classical communication between quantum network nodes is needed to synchronize and schedule resources. This will remain a challenge even in the long-term wherever resources are limited, but it is particularly challenging in the near-term where the resource constraints are significant.

For example, current networked hardware is limited to very few qubits (for example fewer than ten qubits) and only a few (e.g. only one qubit on currently employed NV platforms) of the qubits can actually be used for computation or communication (the rest is for storage only). The communication qubit limitation is particularly challenging as it is shared between local computation and network demands. In that case, only one of these activities can execute at any time per communication qubit and if a platform only has one such qubit, computation and networking are mutually exclusive activities. This may be further complicated by the fact that the network schedule requires accurate synchronization with other nodes of the network. This means that networking cannot be arbitrarily scheduled and if a node misses its allocated networking time, the other nodes will have wasted their resources.

Furthermore, the lifetime of the quantum memories is currently very short (e.g. around 300 ms). This means that distributed resources must be allocated carefully as it is easy to starve an application if its remote peer allocates its resources elsewhere in that small window of time. This is even more likely to happen when running multiple independent applications on each node. Additionally, the network itself will be significantly resource constrained and will require its own careful and time-sensitive resource management. This means that in the near-term, resource scheduling must be carefully coordinated between all end-nodes involved as well as the network itself.

A third challenge relates to the decoherence, i.e. the process that limits the lifetime of quantum memories. Decoherence is the gradual process of losing information due to uncontrolled environmental interactions. A lifetime is often stated as an upper bound, but it is important to note that the quality, i.e. fidelity, is not constant throughout this time. The number usually cited as a lifetime is the time after which the quantum state can no longer be considered quantum at all, but the fidelity degrades steadily the entire time. This means, that for practical applications, qubits, in particular when they are entangled, must be consumed very quickly. Depending on the quality of execution required by the application, this time may be longer or shorter. Therefore, not only is the memory lifetime finite and short, the practically usable timescales are even shorter if the user requires very good quantum fidelity.

The invention aims to provide a quantum node operating system for quantum network nodes in a quantum network that provide solutions to the above-mentioned technical challenges.

In particular, the embodiments described in this application relates to a quantum node operating system that provides the user with the useful resource abstractions and manages the hardware resources for efficient application execution by a quantum network node that is part of a quantum network. In addition to standard classical performance metrics such as latency and throughput, the performance of a quantum application is also determined by the quality of quantum execution. This quantum quality is generally measured by the fidelity 0 ≤ *F* ≤ 1, where a higher value corresponds to higher quality. For a quantum state, F measures the quality with respect to an ideal state. For a quantum gate or measurement, it measures the quality of execution, averaged over all possible states that it could be applied to. For a specific application, F can be translated into its performance (e.g. how much key could be produced in QKD, or the success probability of the application). Thus, efficient execution of a quantum network application means that a quantum network node operating system is capable of delivering a fidelity (minimize decoherence) that satisfies the application's requirements whilst optimizing for the conventional metrics like latency and throughput across multiple applications from multiple independent users.

The embodiments in this disclosure aim to provide a quantum network node operating system which enables a quantum network application to achieve sufficient fidelity of quantum execution and decoherence can be minimized. To that end, the embodiments provide schemes for co-scheduling of local operations with network operations such that decoherence can be minimized. Additionally, the embodiments provide an execution model for a quantum network wherein the quantum network application includes classical code blocks and quantum code blocks. Even though perfect quantum fidelity is not required, poor fidelity will lead to poor performance or even cause the application to abort. However, if that was the only requirement all resources at all the nodes in the network could be reserved for a single application at a time and execute them sequentially just like one would execute applications on a quantum computer. Therefore, the secondary goal of the quantum node operating system is to optimize application latency and throughput across multiple applications from multiple independent users. This will require careful resource management mechanisms and policies, both local and distributed, to address the challenges outlined above.

Further, the quantum node operating system is configured to abstract the underlying quantum hardware resources from the user's applications. Preferably, these abstractions are useful for a programmer. Firstly, this means that they are independent from the quantum hardware platform they are running on. However, just like in classical devices, it may sometimes be useful to expose platform specific details if this enables platform-specific optimizations that would be otherwise unavailable (similar to the march option available in classical compilers). Secondly, in light of the challenges, in particular the significantly constrained resources and short timescales, useful also means that the quantum node operating system provides options to the programmer to help optimize resource usage whilst maintaining platform independence. For example, different applications may have different fidelity thresholds for operation and quantum network protocols on some platforms can achieve higher entanglement generation rates at lower fidelities and thus the operation system may be configured to expose this protocol stack option directly to the application.

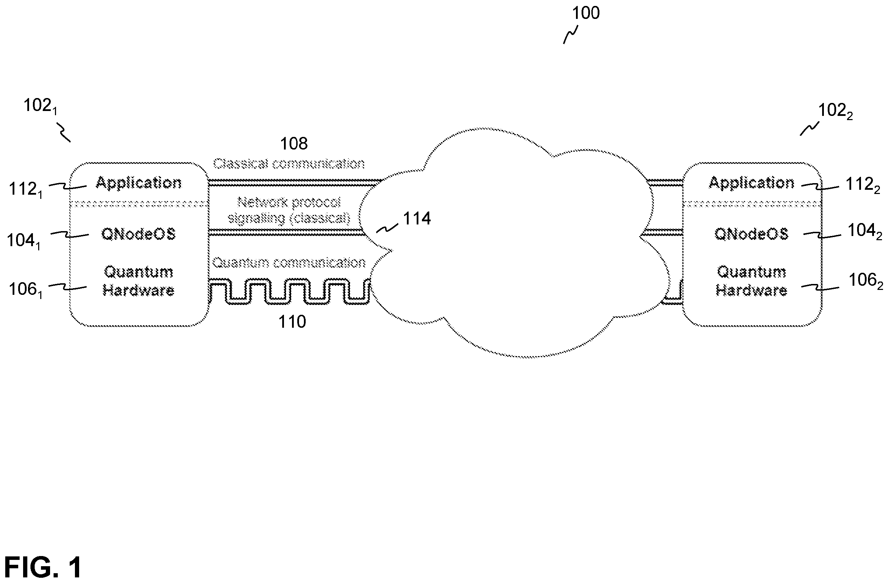

**Fig. 1** depicts a high-level scheme of a quantum network application executed on a quantum network. In particular, the figure depicts a quantum network **100** comprising network nodes, including two end nodes **102_{1,2}.** Each node in the network may be implemented as a hybrid network node including a quantum node operating system **104_{1,2}** (QNodeOS) running on classical hardware wherein the classical hardware is configured to establish classical communication channels, i.e. a classical connection **108** between the nodes. Each node may further include quantum hardware **106_{1,2}** configured to perform local quantum computations on the node and to establish a quantum communication channel, i.e. a quantum connection **110** between nodes. The quantum hardware may include a quantum processing device including storage qubits for local storage of quantum information and for executing local quantum computation operations, e.g. gate based operations, and communication qubits for establishing a quantum connection with a quantum processing device of another end node based on quantum entanglement of the communication qubits. Based on this quantum communication channel nodes can exchange quantum information, e.g. quantum messages.

Each end-node may be configured to execute single-node application **112_{1,2},** which may include classical information processing and quantum information processing. This way, during execution of a single-node application by a first end-node, a quantum connection between the first-end node and another second end-node may be established so that at least part of the quantum information processing may be performed by the second end-node. To establish quantum connections between nodes in the network, the classical communication channels between end nodes may be used to exchange signalling information **114** for setting up and tear down quantum connections between the nodes. This way, applications executed on different end-nodes of the quantum network may communicate with each based on exchanging classical messages over the classical connections and quantum (entanglement) messages over the quantum connections. The transmission and processing of quantum messages between nodes in the network are managed by a quantum node operating system **104_{1,2}** also referred to in short as QNodeOS.

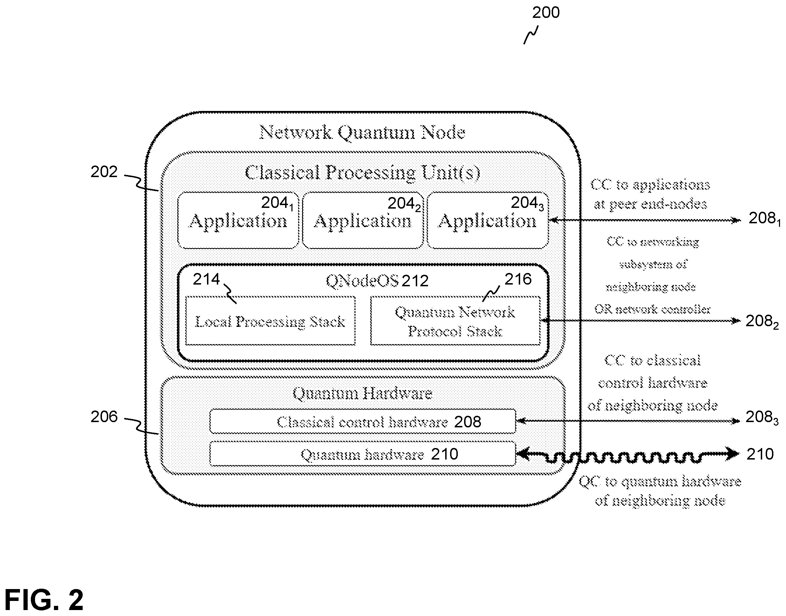

**Fig. 2** depicts a quantum network node according to an embodiment. As shown in this figure, a quantum network node **200** may be configured as a hybrid network node comprising one or more quantum node subsystems. A first quantum node subsystem may be configured as a classical processing unit **202** for executing one or more quantum network applications **204₁₋₃** and a second quantum node subsystem may be configured as a quantum processing unit **206,** comprising classical control hardware **208** and quantum hardware, i.e. one or more quantum devices **210,** for example qubits, which are configured to execute quantum operations in dependence of the execution of an application.

The qubits may be controlled using a variety of signals depending on the physical platform used. For example, for nitrogen vacancies NV in diamond, qubits may be controlled using microwave pulses and laser pulses. The chip-level control of the qubits obeys hard real time constraints and timing precision (nanosecond precision with sub-nanosecond jitter), and may be implemented using waveform generators driving the microwave sources and lasers to interact with the qubits. In turn, custom electronics assisted by a dedicated microcontroller, for example FPGA-based controllers, may be used to control the waveform generators and lasers.

The quantum network node further comprises a quantum node operating system **212** running on the classical processing unit, which provides an interface between the quantum network applications and the low-level quantum hardware of the quantum processing unit. Further, the one or more applications, the quantum network protocol stack of the quantum network node operating system, and the classical control hardware of the quantum hardware are connected to their peers over classical channels (CC). The quantum hardware is connected to its peers over quantum channels (QC).

In this application, a quantum network application may comprise several programs, each running at a different quantum network node as shown in **Fig. 1****.** The programs may communicate based on the transmission and reception of classical messages and quantum (entanglement) messages.

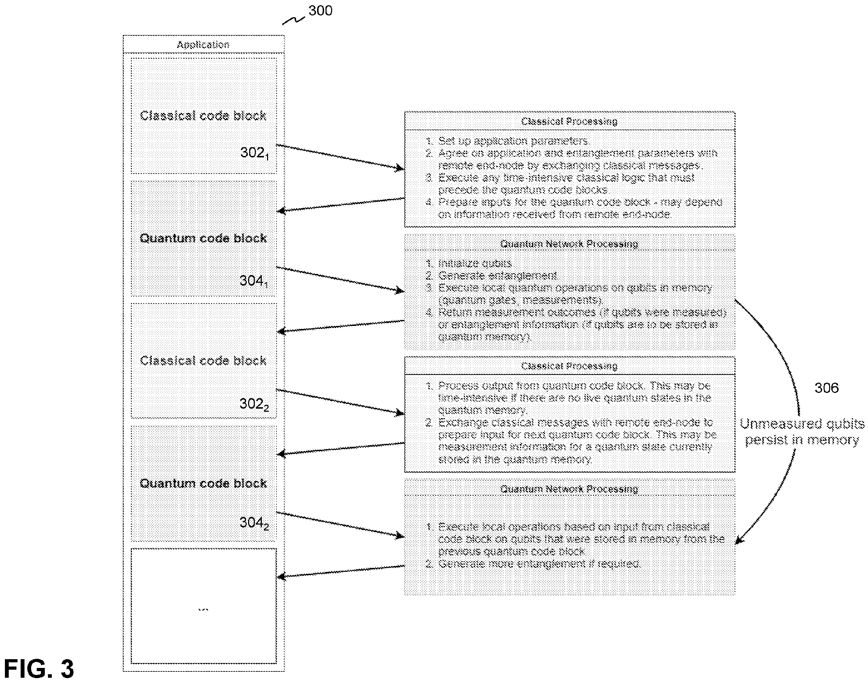

**Fig. 3** illustrates the execution of a quantum network application on a quantum network node as described with reference to the embodiments in this application in more detail. As illustrated in the figure, execution of a quantum network application **300** may include execution of classical code blocks **302_{1,2}** and quantum code blocks **304_{1,2}.** Classical code blocks include operations associated with any form of local classical processing, or classical communication with remote nodes, executed by a classical (part of) the system.

Results of this processing are used as input to the quantum code blocks which are handled by the quantum node operating system and executed on the quantum hardware. Quantum code blocks include low-level operations associated with local quantum computations, quantum measurements or quantum entanglement generation with remote quantum nodes, executed by the quantum hardware. The output of the quantum code blocks (e.g. measurement outcomes or entanglement information) may be returned to the application to be used in further classical processing, which, in turn may provide new input to the next quantum block.

For example, a first classical code block **302₁** may represent classical operations including: setting up application parameters, agree on application and entanglement parameters with remote end-node by exchanging classical messages, execute any time-intensive classical logic that precedes the quantum code blocks and prepare inputs for the quantum code block (which may depend on information received from a remote end-node). A first quantum code block **304₁** may include quantum operations including: initialized qubits, generate entanglement, execute local quantum operations on qubit in memory (quantum gates, measurements); return measurement outcomes (if qubits were measured) or entanglement information (if qubits are to be stored in quantum memory). A second classical code block **302₂** may represent classical operations including: process output from quantum code block (which may be time-intensive if there are no live quantum states in the quantum memory) and exchange classical message with remote end-node to prepare input for next code block (which may be measurement parameters, e.g. basis, for a quantum state currently stored in the quantum memory). A second quantum code block **304₂** may include quantum operations including: execute local operations based on input from classical code block on qubits that were stored in memory from the previous quantum code block and generate more entangled qubits if required. The processing of the classical and quantum code blocks associated with a quantum network application may continue until the application has finished.

Hence, the example of **Fig. 3** shows that execution of a classical code block may depend on the execution of a quantum code block by accessing classical state, including measurement results, or information about the entanglement that was been produced. Similarly, execution of a quantum code block may depend on the execution of a classical code block, for example preparing certain classical variables including classical messages from remote nodes. Different quantum code blocks may depend on each other by sharing a quantum state (acting on the same qubits inside the device), or sharing a classical state (classical variables). Moreover, a quantum state of the program should persist from one quantum code block to a further quantum code block.

Thus, during the execution of a quantum network application, quantum node operating system **212** controls the execution of the quantum code blocks. To that end, the quantum node operating system may include a local processing stack **214** (a local subsystem) for managing local quantum operations and classical operations and a quantum network stack **216** (a network subsystem) for managing quantum communication (entanglement) between nodes.

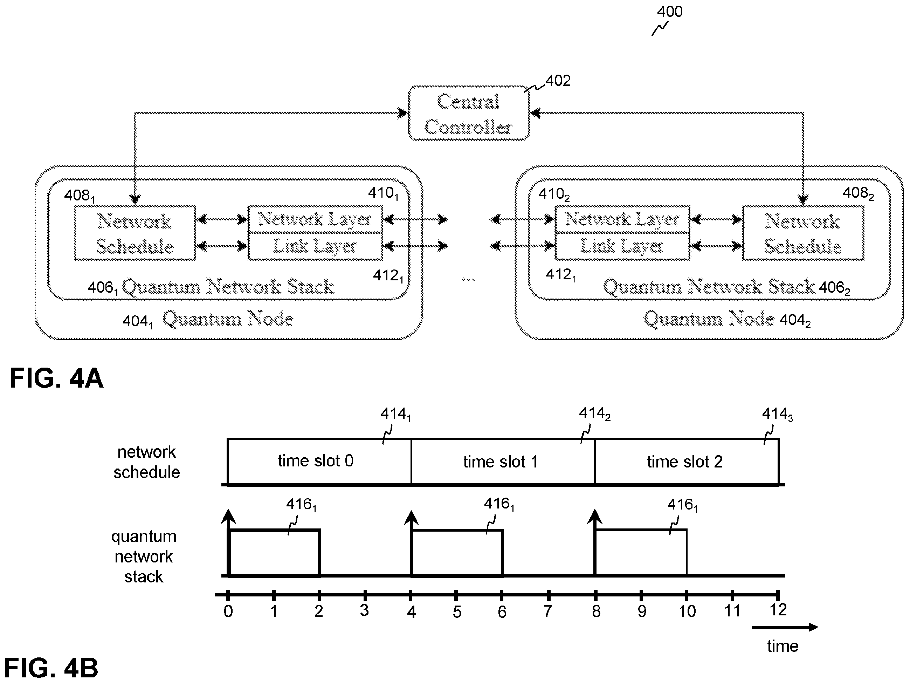

**Fig. 4A** and **4B** depict a schematic of a quantum network comprising quantum network nodes and a network schedule for coordinating quantum network nodes in the quantum network according to an embodiment. **Fig. 4A** illustrates a quantum network **400** including a central controller **402** configured to collect information, metrics, about the network (e.g. the topology of the network, the resources of the network nodes, network traffic, etc.) and to generate network schedules **408_{1,2},** based on the collected information. The central controller may be configured to generate network schedules for coordinating the assignment of quantum network resources to quantum network nodes that require establishment a quantum communication link through entanglement. To that end, in an embodiment, a stack including a link layer and network layer as known from the above-cited articles by Dahlberg et al, and Kozlowski, et al respectively may be used.

**Fig. 4B** depicts an example of a network schedule generated by the central controller and provided to quantum network nodes. The schedule may include a sequence of time slots **414_{1,2}** wherein different parts of the time slot can be assigned to specific quantum network operations tasks.

Given that generating an EPR pair on a link, i.e. a pair of entangled qubits that are in a Bell state, requires that both quantum network nodes start an entanglement attempt simultaneously, the network schedule may be configured such that the quantum network node operation system assigns a higher priority to a quantum network process than any other process. For example, as shown in **Fig. 4B****,** at the start of a time slot of the network schedule, a block **416₁₋₃** may be reserved for quantum network processes. In some embodiments, during this block processes other than quantum network processes are blocked. Hence, during the reserved block, the quantum hardware can only be accessed by quantum network processes that are executed by the quantum network stack. This way, a quantum network process can be executed on the quantum hardware as soon as a communication qubit is available. Moreover, as other quantum network nodes will execute processes based on the same network schedule, coordination of the quantum network processes between neighbouring nodes is assured. This way, a quantum network node can start attempting entanglement with its neighbouring quantum network node as soon as possible and minimize wasted attempts on the neighbour node. This is important as entanglement should be realized within the characteristic coherence times of the quantum hardware to ensure quantum network operations of sufficiently high fidelity.

The central controller may transmit network schedules to quantum network nodes **404_{1,2}** so that pairs of nodes are able to establish an entangled quantum communication link in a synchronized way. To that end, a network schedule may be provided to the quantum network stack **406_{1,2}** of the quantum node operating system that runs on the quantum network node. The quantum network stack may subsequently manage entanglement generation between different quantum nodes based on the network schedule.

Resource coordination for entanglement generation between two quantum network nodes in a network of quantum network nodes requires time synchronization of processes between quantum network nodes at different levels. To schedule and coordinate resources for quantum communication to different quantum network nodes, the network scheduling protocol, may be used to achieve the required synchronization of processes on the application level and link level. The scheduling protocol requires clocks of the quantum network nodes that are being used to be synchronized, wherein the accuracy of the synchronization will depend on the application and network protocol requirements.

Additionally, the physical layer entanglement generation protocols require timing synchronization between neighbouring quantum nodes that engage in a qubit entanglement generation process. These physical layer protocols require synchronisation with much higher precision, e.g. of the order of nanoseconds with sub-nanosecond jitter, so that a further synchronization process will take place during the process of establishing an entanglement. Synchronization schemes for achieving accurate synchronization at the physical layer of the quantum network node are known. For example, the white rabbit synchronization protocol https://white-rabbit.web.cern.ch/ may be used.

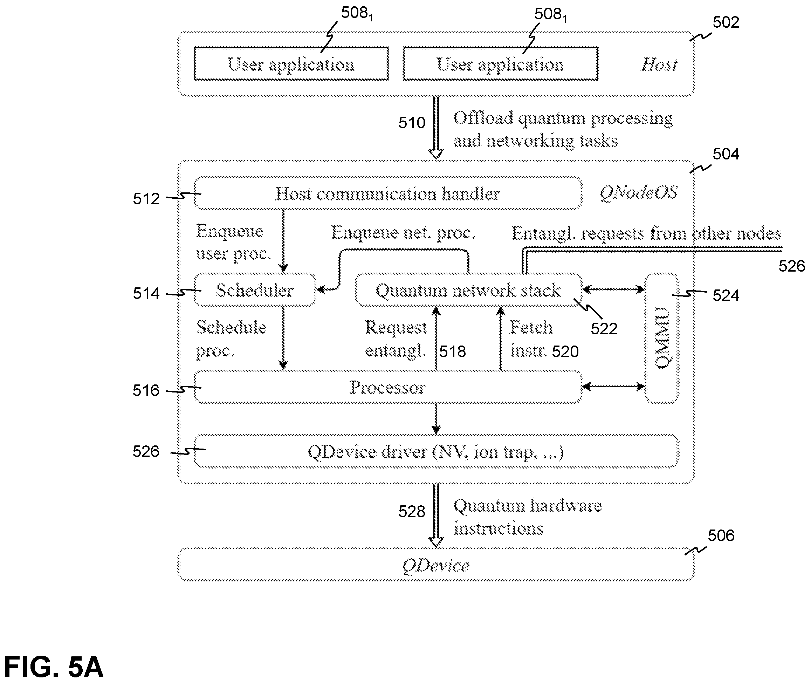

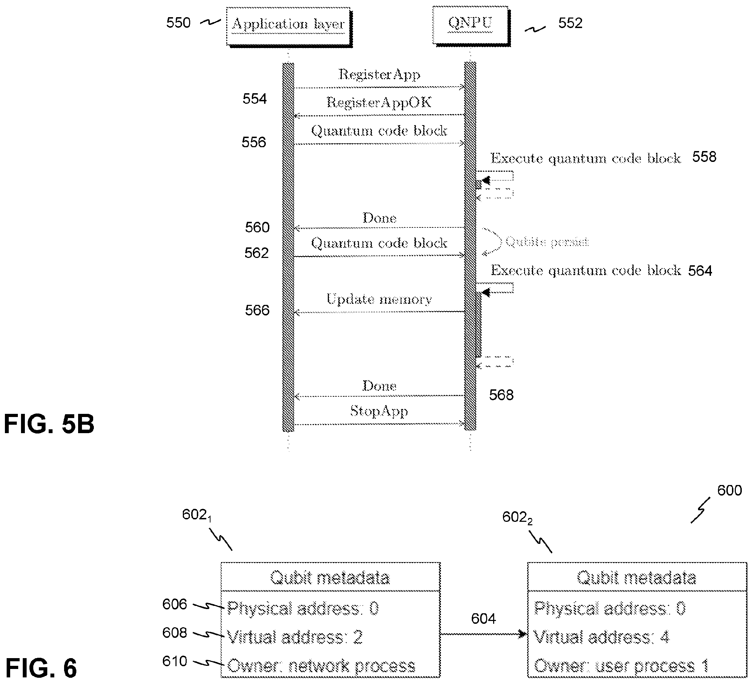

**Fig. 5A** and **5B** depict a schematic of quantum network node system and an execution model for executing a quantum application on a quantum network node system according to an embodiment. In particular, **Fig. 5A** depicts a schematic of a host **502,** e.g. a classical computer for executing classical code blocks of a quantum network applications (user applications) **508_{1,2},** and a quantum network node operation system **504** running on a quantum network processing unit QNPU connected to a host configured to execute quantum code blocks of the user application.

As already briefly described with reference to **Fig. 3****,** a quantum network application may include programs (single-node applications) running on different end-nodes. These single-node applications may include of blocks of quantum real-time code (quantum instructions and time-sensitive classical control that is needed for executing the quantum instructions), and blocks of fully-classical code (classical communication with other end-nodes and elaborate processing that is not time-sensitive). To process a quantum network application that comprises quantum and classical code blocks with completely different processing requirements, the host may be configured as a classical computer running a classical operating system (such as Linux). In contrast, the quantum network processing unit QNPU may be configured as a co-processor of the host, wherein quantum network processing unit runs the quantum network node operating system. Typically, the QNPU may be implemented in a SoC containing a microprocessor/microcontroller integrated with either FPGA fabric or custom hardware.

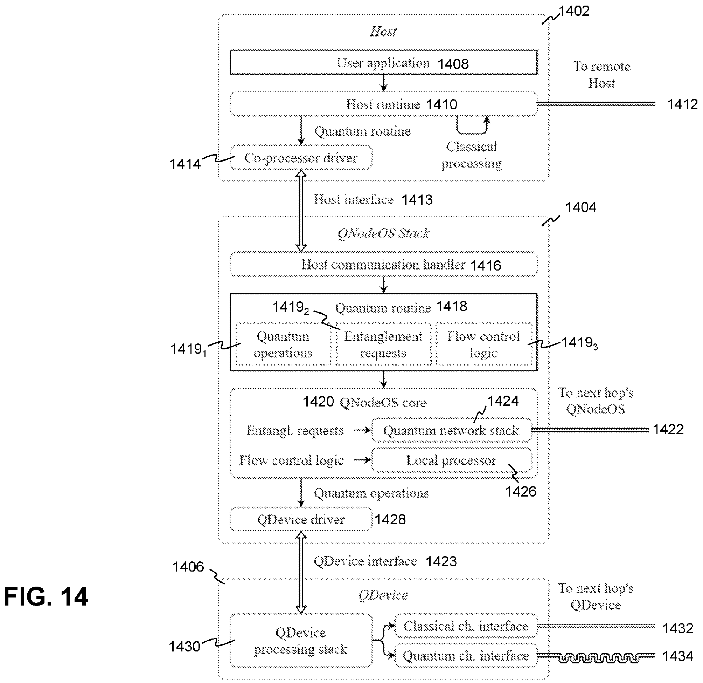

In an embodiment, a network quantum assembly language comprising instructions for entanglement generations may be used as an interface language which the host layer applications may use to interact with quantum network node operating system. In another embodiment, executable machine code may be used to by the host layer application to interact with the quantum network operating system. The quantum assembly language may include an instruction set including operations for local quantum computing and operations for quantum networking. Further, the quantum assembly language may provide a useful set of OS abstractions for a networked quantum OS. The quantum assembly language may be platform-independent with the option to use a flavour for hardware platform specific optimizations. Furthermore, the quantum assembly language may expose several options for the programmer to help optimize resource usage. In addition to exposing the option to choose the fidelity of network entanglement, the quantum assembly language may also allow the programmer to combine classical control logic with quantum instructions to minimize back-and-forth communication when no external input is required. This feature is particularly valuable when a program is waiting for entanglement to be generated. The quantum assembly language instruction set and its execution by the quantum network node operating system is described hereunder in greater detail with reference to **Fig. 14** and further.

To run quantum code blocks of a quantum network application on the quantum network node operating system, the host layer may first register a quantum network application **508_{1,2}** with the operating system. Upon registration, the operating system may create a user process and a context which will be used to store state (e.g. metadata) for that process and returns a new application ID, which may be used by the host layer to identify instructions belonging to the quantum network application. Once registered, the application network application may execute the fully classical code blocks locally on the host layer CPU(s) and may transform the quantum real-time code blocks in a format suitable for processing by the quantum network node operating system. In an embodiment, the quantum real-time code blocks may be transformed into instructions of a quantum assembly language routine **510,** which are forwarded to the quantum network node operating system running on the QNPU. In another embodiment, the quantum real-time code blocks may be transformed into operations of executable machine code. A first subsystem, a local subsystem, of the quantum network node operating system may execute the instructions, wherein instructions related to entanglement generation are forwarded to quantum network stack **522,** a second subsystem of quantum network node operating system. Local quantum operations, such as quantum gate operations, associated with the user process and entanglement generation operations, associated with a network process and handled by a quantum network stack, are then issued to the quantum hardware **506** via a suitable quantum hardware driver **526** for that particular quantum hardware platform, wherein the scheduling of the user and network processes are based on a network schedule that is provided to the quantum network node.

The quantum network node operating system provides an OS abstraction layer for the QNPU that is capable of communicating to the quantum hardware **506.** It may be implemented entirely in software running on a classical CPU, or parts of its functionality may be implemented in classical hardware. An interface **528** may be used to connect the processor **516** to a low-level electronic control system that controls the qubits. In another embodiment, the processor may be integrated with the quantum hardware, so that the processor can directly operate on the quantum hardware.

The quantum real-time code blocks **510** may be offloaded by the host to the operating system via host communication handler **512,** which links the routine to the application's user process, which is created when the host layer first registered the application. The user process may be associated with context information, such as the process ID, parent application ID, scheduling state and priority, program counter, and pointers to the process data structures and instructions. The user process is then handed over to a scheduler **514** of the operating system. The scheduler's responsibility is to schedule processes based on scheduling information, e.g. a network schedule, which may be provided by a central controller of the quantum network to which the quantum network node belongs to. In addition to user processes, the operating system also has a persistent kernel network process. Once the user process is selected by the scheduler, it is handed over to the processor **516** which executes the instructions of the user process, wherein the processor may step through the instructions and perform one of the following actions:
i. for quantum logic operations (e.g. apply a quantum gate or perform a quantum measurement), issue a suitable hardware instruction to the quantum hardware via platform-specific quantum hardware driver;
ii. for classical logic operations, execute the instructions locally, or
iii. for entanglement instructions, submit a request to the quantum network stack.

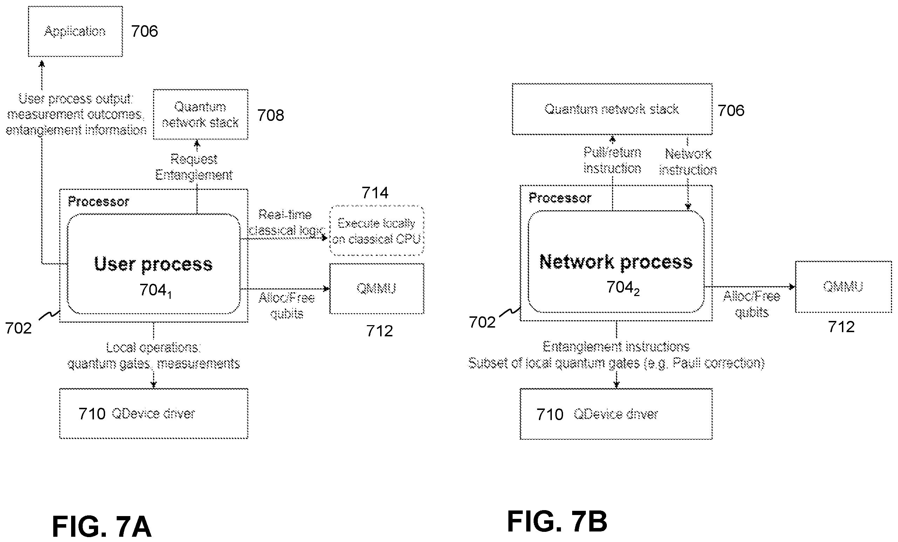

The user process does not execute any networked instructions itself. Instead, when the processor is running the kernel network process, it will fetch instructions from the quantum network stack, issue them to the quantum hardware, and return the results back to the stack as will be explained hereunder in more detail with reference to **Fig. 7-10****.**

The quantum network node operating system also has a quantum memory management unit **626** (QMMU) for persistent memory management. The QMMU may implements basic memory management functionality, including identification of virtual address spaces for different processes, allocation of qubits to these processes, and ownership transfer of a physical qubit from one processes to another process. The virtual quantum memory address space may isolate the qubit address spaces of different operating system processes, e.g. different user processes and different network processes. Ownership transfer is an inter-process communication (IPC) mechanism for passing qubits between different processes, for example between a user process and a network process. Since quantum states cannot be copied due to the no-cloning theorem, this is the only valid IPC for passing quantum data between address spaces. Ownership transfer of a qubit from a user process to a network process (or viz versa) may be implemented logically by updating the qubit owner and allocating a new virtual address in the new process' virtual address space rather than physically moving quantum data in the memory in order to minimize fidelity losses due to imperfect hardware operations and additional latency.

**Fig. 5B** depicts the execution model for executing a quantum application on a quantum network node system, for example a quantum network node system as described with reference to **Fig. 5A****.** The model includes a step (step **554**) of a host system **550** registering a quantum network application, including classical code blocks and quantum code blocks with a quantum network node **552,** wherein the quantum network node comprises quantum hardware for local quantum operations and for quantum network operations.

Thereafter, the host system may execute the quantum network application by executing a first classical code block at the host system and by providing a first quantum code block to the quantum network node (step **556**). Here, the classical code blocks may represent software routines which may be written in a high-level programming language which may be executed on a classical computer of the host system. The quantum code blocks may include quantum operations and time-critical classical operations. Quantum code operations may include local quantum operations not related to entanglement generation and/or at least an entanglement generation operation for entanglement generation between the quantum network node and a further quantum network node. Here, the quantum network nodes may be part of a network of quantum network nodes, which may be provided with a network schedule that can be used for coordinating entanglement generation between quantum network nodes. In an embodiment, the quantum code block may include instructions of a quantum assembly language that include operations for generating entanglement, which can be processed by a processor of the quantum network node. In an embodiment, the processor may be part of a quantum network node operating system as described with reference to the embodiments in this application. In another embodiment, the quantum code block may be executable code, e.g machine code, which can be executed by a processor of the quantum network node.

When receiving the quantum code block, the quantum network node may execute quantum operations on the quantum hardware which may include communication qubits for entanglement generation and storage qubits, on which quantum gates can be applied. The qubits can be measured and the resulting outcome may be stored in a classical memory by the processor. When entangled, a communication qubit of the quantum network node may be connected through a quantum channel (a quantum communication link) to a further quantum network node. The quantum channel may also include classical communication which is needed for synchronization, phase stabilization or other mechanisms.

When the execution of the quantum operations of the first quantum code block is finished, the quantum network node may send a notification message back to the quantum network application (step **560**). The notification message may include first execution results, e.g. information on the outcome of the execution of the first quantum code block. These first execution results may be used when executing a second classical code block. The first execution results may include measurements of one or more qubits or information about a communication qubit that is not measured and stored in the quantum memory. In an embodiment, the execution results may include qubit metadata. For example, in an embodiment, the qubit metadata may include at least part of the qubit metadata that is managed by a quantum memory management unit (QMMU), such as ownership of a qubit and/or transfer of ownership of a qubit. These metadata are described in greater detail with reference to **Fig. 6****.**

The second classical code block may be executed and a second quantum code block may be sent by the application to the quantum network node (step **562**), which may start executing the quantum operations of the second quantum code block (step **564**). These operations may include local operations on communication qubits that are stored during the execution of the first quantum code block. In some embodiments, a memory update message may be sent to the quantum network application (step **566**) to signal for example, that a particular stored communication qubit has been measured and to provide the measured value to the application. This message may be sent to the application during the execution of the second quantum code block. Thereafter, when the execution of the quantum operations of the second quantum code block is finished, the quantum network node may send second execution results back to the quantum network application (step **568**),

**Fig. 6** depicts an example of an ownership transfer of a qubit by a quantum memory management unit according to an embodiment. In particular, the figure depicts first qubit metadata **602₁** indicating that a qubit associated with a first physical address 0 **606** is owned by a network process **610** associated with a first virtual address 2 **608** that is managed by the quantum network stack. Once the network process has successfully generated an entanglement, ownership of the physical qubit 0 may be transferred to a first user process 1 which is associated with virtual address 4. Thus, a qubit ownership transfer is a logical update **604** to qubit metadata that is managed by the QMMU. In an ownership transfer, the process that owns the physical qubit is updated and a new virtual address is allocated in the new process' virtual address space. This way, execution of a quantum hardware instruction which would cause degradation in fidelity due to hardware imperfections and additional processing time can be avoided.

As can be seen from **Fig. 5A****,** the use of processes, user processes and network processes, as logical entities that can be scheduled by the scheduler and processed by the processor and the use of the quantum network stack as a quantum network subsystem for entanglement generation, provides the ability to implement scheduling policies which can be used to address the issue of scheduling user processes and network processes. This enables the quantum node operation system to meet the challenges as discussed previously.

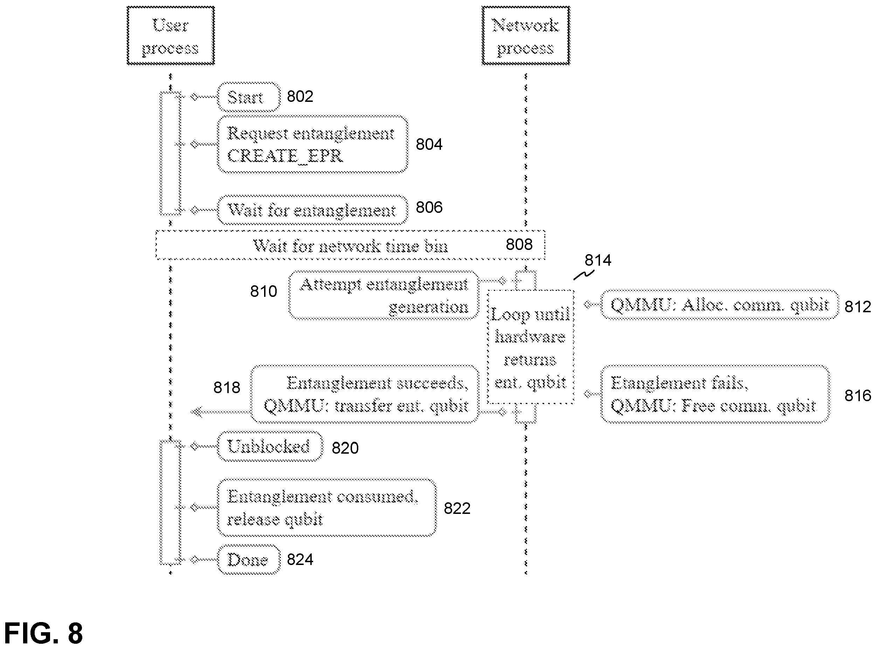

Hence, the ability to control the scheduling of resources between user processes and network processes is achieved by assigning a kernel process exclusively to network processes and by limiting user processes to local quantum instructions only. Thus, if an application needs entanglement from the network, the user process executed by processor **512** will submit an entanglement request **518** to the quantum network stack **522.** In some embodiments, this request may be included in the instruction set of a quantum assembly language, which assumes a quantum network stack that handles all entanglement generation requests asynchronously with respect to other local quantum operations of the user process. The network process will then coordinate the requested entanglement generation, with the rest of the network and eventually return an entangled qubit to the user process. Examples of such coordinated entanglement generation will be described hereunder with reference to **Fig. 8-10****.**

Hence, the quantum network node operating system defines user processes including local quantum operations and associated context and network operations which are scheduled by the scheduler and processed by the processor. If during the processing of a user process, a request for entanglement generation is requested, the request is forwarded to the quantum network stack which handles the entanglement generation request independently from the processing of the user process. The handling of the entanglement generation request by the quantum network stack may be referred to as a quantum network process or in short a network process. This network process may be executed by the scheduler based on information in the network schedule that is provide to the different quantum network nodes. The network schedule signals the scheduler at what time instance the processor may optimally execute the network process as described with reference to **Fig. 4** and **5****.** This way, the network process allows for entanglement generation to be executed asynchronously of local quantum instructions of the user process.

Thus, a user process can continue executing local instructions even after a entanglement generation request has been forwarded to the quantum network stack. The entanglement generation request does not block execution of the user process, which increases instruction throughput during times when the network process cannot proceed. At the same time, network processes may be executed by the quantum network stack based on the network schedule. This is important because entanglement generation requires careful synchronization with a neighbouring node (and possibly the rest of the network) and thus requires execution at precise moments in time which are not controlled or even known by the user process. By separating the quantum network process from the user process, synchronization may be centrally controlled by the network stack for all of the entanglement requests that are pending at that particular node. Further, the process status of the entanglement generation rests allows the scheduler **514** to schedule it based on the network schedule while accounting for the local scheduling requirements of the other applications running on that quantum network node. Additionally, it gives the option to use scheduling policies to change its behaviour.

**Fig. 7A** and **7B** illustrate the execution of a quantum code according to an embodiment. In particular, **Fig. 7A** illustrates a user process **704₁** associated with a quantum network application **706,** which is executed by the processer **702** of the quantum network node operation system. Here, the execution of a user process may include one or more of the following operations:
(i) execute local quantum operations via the quantum device driver **710;**
(ii) execute classical operations on a classical CPU **714;**
(iii) allocate/free quantum memory via the QMMU **712;**
(iv) issue a network request, e.g. entanglement requests, to the quantum network stack **708.**
A user process cannot directly issue an entanglement generation request to the quantum device. Instead, it has to request the quantum network stack to process the entanglement generation request instruction. Hence, user processes are free to execute any non-networked instructions independently of the network process and other user processes. A user process may choose to do this processing of the non-networked instructions prior to issuing an entanglement generation request, to the quantum network stack. Alternatively, it may choose to submit the entanglement generation request first and then execute some other local instructions. However, once the application reaches a point in its execution where an entangled qubit is required, the user process enters into a blocked state and is flagged as waiting for the network process to execute entanglement generation.

**Fig. 7B** illustrates a network process **704₂,** which is executed by the processer **702** of the quantum network node operating system and which is dedicated to entanglement generation. The scheduler of the quantum network node operating system may schedule a network kernel process based on a network schedule as described with reference to **Fig. 4****,** which may include reserved blocks in time slots that are reserved for executing quantum network operations. As shown in the figure, a network process **704₂** may be executed by the processor **702** of the quantum network node operating system by fetching instructions **703** from the quantum network stack **706.** These instructions may include entanglement generation requests and a limited set of local gate operations. During execution of a network process, execution of the user process is blocked so that only the quantum network operations have access to the quantum hardware. The logic behind the quantum network operations may be opaque to the rest of operating system, which allows the network protocol stack **706** to evolve independently of the rest of the operating system as long as it keeps providing the same service. In an embodiment, the Quantum Entanglement Generation Protocol (QEGP) or an adapted version thereof may be used as the link layer protocol and the Quantum Network Protocol (QNP) may be used as the network layer protocol. The physical layer protocol may be implemented in the hardware layer below the layer of the quantum network node operating system.

If an entangled qubit pair is generated by the network process, the entangled qubit may be handed over to the blocked user process. Entanglement requires metadata (entanglement metadata), which is generated by the quantum network stack to account for the non-local nature of entanglement. For example, an entanglement identifier allows an application to identify which qubits at two separate nodes are entangled with each other. Various other entanglement parameters such as the goodness, i.e. the estimated fidelity, may be used as well. This information may be provided by the network protocol stack.

Thus, to hand an entangled qubit over to a user process, two steps are executed:
1. entanglement metadata is copied to the user process metadata; and,
2. the entangled qubit is transferred between virtual address spaces using the ownership transfer mechanism of the QMMU **712.**

Once all the entangled pairs that the user process was waiting for have been delivered, the scheduler will wake the user process and allow it to execute up to completion or until the next entangled qubit is required.

The quantum network nodes in the quantum network may be provided with a network schedule for coordinating entanglement generation between quantum network nodes in the quantum network. Further, a quantum network node may include a quantum network node operating system comprising a local subsystem for executing local quantum operations which are not related to entanglement generation and a quantum network subsystem for executing operations relating to entanglement generation.

A quantum network application may be executed on by an application layer running on a host computer, which may send quantum routines represented by quantum code blocks to the operating system of a quantum network node, which may executed the quantum code blocks based on user processes executed by a local subsystem and network processes executed by a quantum network subsystem (the quantum network stack). **Fig. 8-****10** illustrate various embodiments of execution of quantum routines represented by quantum code blocks by the quantum network node operating system.

**Fig. 8** illustrates the execution of a quantum network application according to an embodiment. In particular, the figure includes a step **802** of starting a scheduled user process by a local subsystem of the quantum network node operating system, wherein the user process may include executing the quantum routine represented by a quantum code block. During execution of the user process, the processor may of the operating system may forward entanglement generation requests to a quantum network subsystem (a quantum network stack) of the operating system (step **804**).

The quantum network subsystem, which has a persistent kernel process associated with it, starts preparing the requested entanglement generation as a background task in order to coordinate the entanglement generation with the other quantum nodes before the network process is scheduled to run, i.e. execute the entanglement generation. This processing may include generating entanglement metadata and sending a request for entanglement over a classical communication link to a quantum network node to notify the quantum network node that entanglement is desired. During the preparation of the entanglement generation by the quantum network subsystem, the local subsystem of the operating system continues processing local operations associated with the user process until an operation requires the entanglement, e.g. a measurement of an entangled qubit pair. At that moment, the user process may be blocked (step **806**) and the processor may wait for the scheduler to signal that the network process can be started. The scheduler may then use a time slot as defined in the network schedule to start the network process (step **808**) so that the entanglement between both quantum network nodes can be realized.

The processor may then start executing the quantum network operations of the network process based on the entanglement metadata to establish entanglement with the other quantum network node (step **810**). When starting the network process, the QMMU may transfer ownership of a communication qubit that is going to be used in the entanglement generation to the network process (step **812**). From that moment on, only the network process has access to the quantum hardware (in particular the communication qubit that is going to be used in the entablement generation) so that execution of the network process does not collide with the execution of the user process.

The network process for establishing entanglement may require multiple attempts. Hence, the network process will repeat the process in a loop until entanglement is generated (step **814**) within a predetermined time as signalled by the network schedule to the scheduler of the operating system. If entanglement generation does not succeed in the allocated time, the network process has to wait for the next time slot (step **816**). In that case, the communication qubit is released from the ownership by the network process.

If entanglement generation succeeds, the entangled communication qubit may be transferred by the QMMU to the user process (step **818**). This unblocks the user process (step **820**), which may consume the qubit (step **822**), e.g. measure the qubit or apply another operation to the qubit. After consumption of the qubit, the ownership of the qubit by the user process is released. Thereafter, the user process may continue until the end of the quantum code block and return a result to the quantum network application.

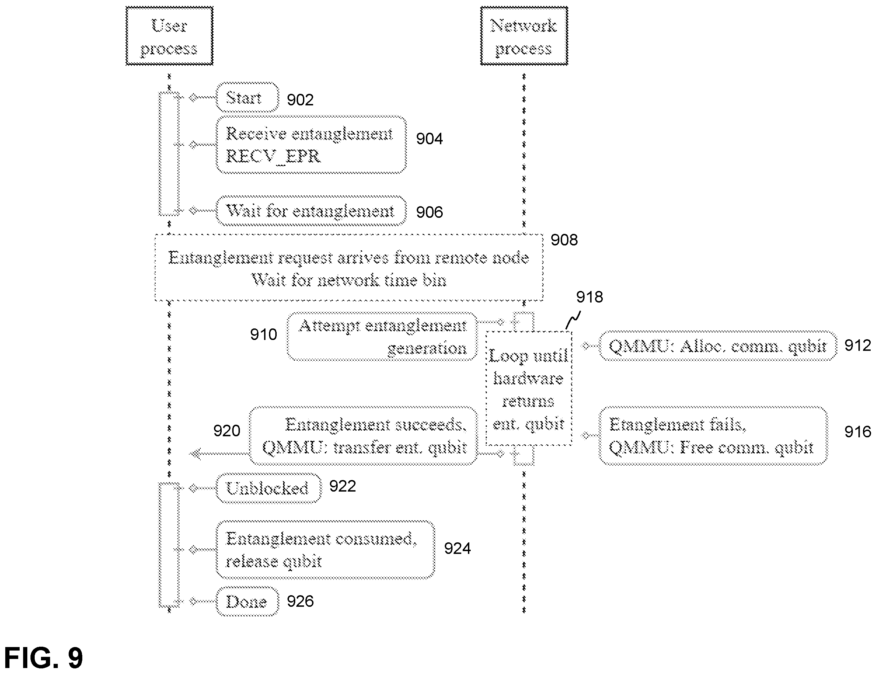

**Fig. 9** illustrates the execution of a quantum routine associated with quantum network application according to another embodiment. This flow is similar to the flow of **Fig. 8** with the difference that when the user process is executed, it may process another entanglement operation, in this case a receive entanglement operation, i.e. an operation wherein the quantum network node waits for a request for entanglement from another quantum network node (a requesting network node). During the processing of the operations of the user process by the local subsystem of the operating system, the processor may forward the quantum network operation to a quantum network subsystem (the quantum network stack) of the quantum network node operating system (step **904**).

The quantum network subsystem, which has a persistent kernel process associated with it, may start processing the receive entanglement operation as a background task in order to prepare entanglement generation with the other quantum nodes before the network process is scheduled to run the entanglement generation. This processing may include sending a response over a classical communication link to the requesting quantum network node to notify the requesting quantum network node that the request for entanglement has been received. The processing may further include receiving entanglement metadata from the requesting quantum network node.

During the preparation of the entanglement generation by the quantum network subsystem, the local subsystem of the operating system may continue processing the user process until access to the entanglement is required, e.g. a measurement of an entangled qubit pair. At that moment, the user process may be blocked (step **906**) and the processor may wait for the scheduler to signal that the network process can be started. The scheduler may then use a time slot as defined in a network schedule to start the network process (step **908**) so that the generation of the entanglement between both quantum network nodes is coordinated.

The processor may start executing the entanglement generation by the network process based on the entanglement metadata to establish entanglement with the other quantum network node (step **910**) in a similar way as described with reference to **Fig. 8****.** When starting the network process, the QMMU will transfer ownership of a communication qubit that is going to be used in the entanglement generation to the network process (step **912**). From that moment on, only the network process has access to the quantum hardware. The network process will repeat the process in a loop until entanglement is generated (step **914**) within a predetermined time as signalled by the network schedule to the scheduler of the operating system. If entanglement generation does not succeed within the allocated time, the network process has to wait for the next time slot (step **916**). In that case, the communication qubit is released from the ownership by the network process. If entanglement generation succeeds, the entangled communication qubit may be transferred by the QMMU to the user process (step **918**). This unblocks the user process (step **920**), which may consume the qubit (step **922**), e.g. measure the qubit or apply another operation to the qubit. After consumption of the qubit, the ownership of the qubit by the user process may be released. Thereafter, the user process may continue until the end of the quantum code block and return a result to the quantum network application.

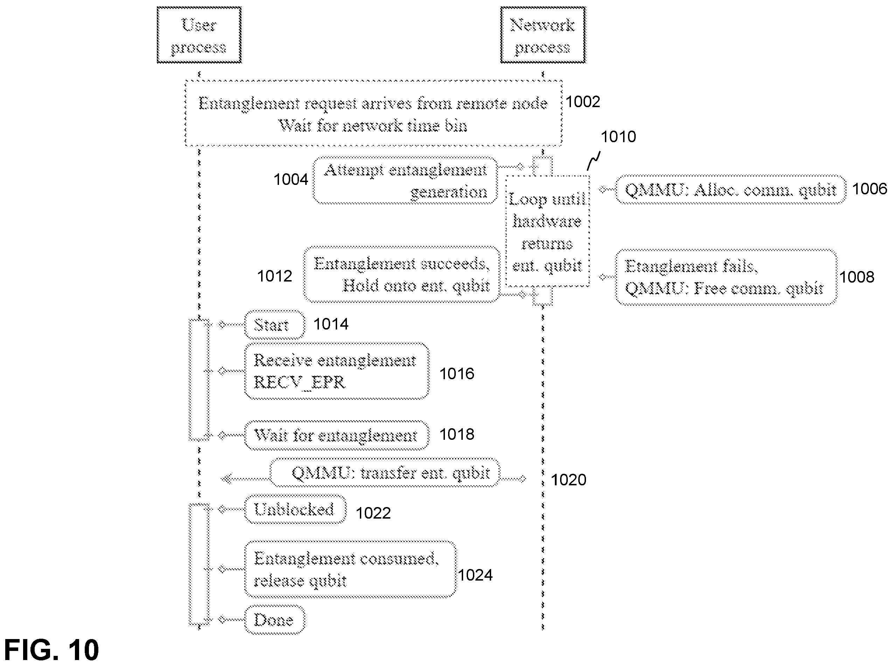

**Fig. 10** illustrates the execution of a quantum routine associated with quantum network application according to yet another embodiment. This figure depicts an alternative embodiment of the flow described with reference to **Fig. 9****,** wherein the quantum network subsystem of the quantum network node operating system receives a request for entanglement from another quantum network node over a classical communication link (step **1002**). Then, the scheduler may then use a time slot as defined in a network schedule to start a network process so that the generation of the quantum communication link between both quantum network nodes is coordinated.

The processor may start executing the quantum network operations of the network process based on entanglement metadata to establish a quantum communication link with the other quantum network node based on entanglement (step **1004**). When starting the network process, the QMMU will transfer ownership of a communication qubit that is going to be used in the entanglement generation to the network process (step **1006**) so that only the network process has access to the quantum hardware. The network process will repeat the process in a loop until entanglement is generated (step **1010**) within a predetermined time as allocated by the network schedule. If entanglement generation fails in the allocated time allocated, the network process will release the ownership of the communication qubit (step **1008**). If entanglement succeeds, the communication qubit is stored and the quantum network process keeps the ownership of the qubit (step **1012**).

Then, at a certain moment, the local subsystem of the quantum network node may start executing operations of a user process (step **1014**), wherein the processor may forward a receive entanglement operation to a quantum network subsystem (a quantum network stack) of the quantum network node operating system (step **1016**), which may determine the entanglement identified by the receive entanglement operation is stored. The execution of the user process may continue until a quantum operation requires access to the entanglement. In that case, the scheduler may block the user process and start execution of the network process (step **1018**). As the entanglement is already generated and stored, the network process will only transfer ownership of a communication qubit that participates in the entanglement (step **1020**). Thereafter, the scheduler may unblock the user process (step **1022**) and continue its execution wherein a quantum operation that requires access to the entangled qubit may consume the qubit. After consumption of the qubit, the ownership of the communication qubit by the user process may be released (step **1024**). When the execution of the user process is finished, the results may be returned to the quantum network application to which the quantum code block belongs.

The strict separation between local user processes and network processes as explained with reference to **Fig. 8-10** enable execution of quantum network applications on multiple quantum network nodes of a quantum network through scheduling mechanisms and scheduling policies. Further, the user processes and the network processes can be scheduled such that they can generate entanglement between to quantum network nodes and consume that entanglement as fast as possible to ensure the highest fidelity.

In an embodiment, a cooperative scheduling policy may be selected that determines how the user process and the network processes are executed by the operating system. That is, once a first quantum routine represented by a first quantum code block is scheduled by the scheduler of the quantum network node operating system, the processor of the operating system may run it until either instructions are completed, or it is blocked because it has to wait for entanglement of the quantum network node with another quantum network node. The routine may finish while the process still holds a live quantum state in memory which can be processed in a subsequent second quantum routine represented by a second quantum code block (e.g. after the host exchanges some classical information with its peer). During the processing of the quantum bode blocks, the QMMU will keep track of the ownership of the qubit by either a user process or a network process.

A cooperative scheduler may be used if it is not allowed to the move live quantum states into storage to free up the communication qubit for an incoming process. This may be the case if the quantum state would suffer from significant fidelity degradation due to hardware quality and/or additional sources of decoherence (nuclear dephasing noise). This may be the case for current NISQ type quantum platforms like NV centers. Furthermore, due to the limited number of qubits (just one or two or several) there is little room for more complex strategies. Therefore, once a quantum network application acquires the communication qubit, it is allowed to proceed uninterrupted until it is freed. If the process is currently waiting for a further routine, other processes are free to execute classical instructions such as issuing entanglement requests to the network stack, but otherwise require waiting for the communication qubit to become available. In case memory size and/or lifetimes of the qubits increase, this strategy may be adapted to full optimize the use of the increased capabilities.

The quantum network node operating system uses the concept of user processes and kernel processes, including the quantum network stack (kernel) process. User processes are released (i.e., they become ready) asynchronously, i.e. when a process routine is loaded, or when they leave the waiting state, while the quantum network stack process may be released periodically or repeatedly, at the start of each time slot of the network schedule. Given that entanglement generation on a link requires that both nodes attempt entanglement simultaneously, the operating system assigns the quantum network stack process a priority higher than any user process. This ensures that, at the start of each time slot of the network schedule, the priority-based scheduler can assign the quantum network node process as soon as the processor is available, and thus a node can start attempting entanglement with its neighbour as soon as possible and minimize wasted attempts on the neighbouring node.

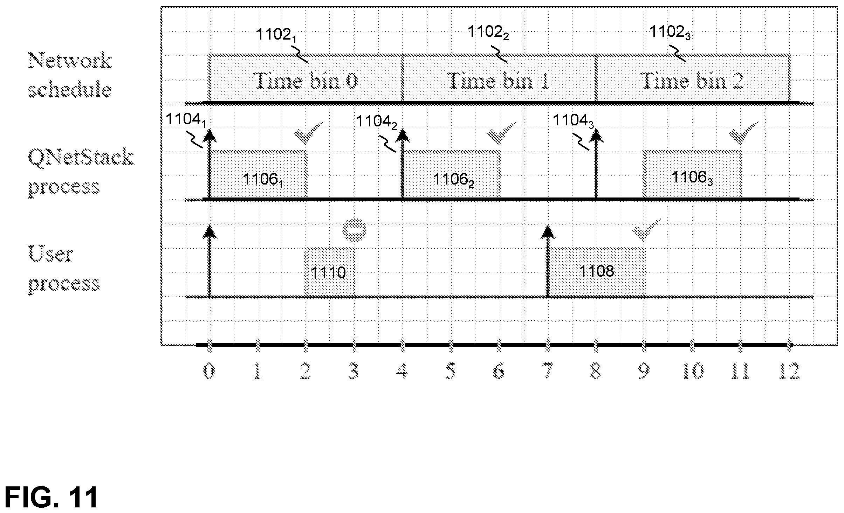

**Fig. 11** illustrates an example of a network schedule for a user process and an associated quantum network process according to an embodiment. The quantum network process may be activated at the start **1104₁₋₃** of a time slot **1102₁₋₃,** and may be scheduled as soon as the processor is available. For example, as shown in **Fig. 11****,** at time instances 0 and 4, quantum network processes **1106₁₋₃** may be scheduled immediately at the start of a time slot, while at time instance 8 quantum network process **1106₃** may be scheduled after one time unit, as soon as a running user process **1108** has ended. Further, user process **1110** may be ready to start at time instance 0, at which the (prioritized) quantum network process is ready as well and thus takes precedence. Therefore, the user process **1110** is scheduled at time instance 2, as soon as quantum network process **1106₁** is completed. Thereafter, the quantum network process goes into a waiting state at time instance 3 and becomes ready again at time instance 7. At that time instance, user process **1108** is scheduled immediately because no other processes are running.

Thus, in an embodiment, a scheduling policy as depicted in **Fig. 11****,** may be used, resulting in the activation of higher-priority network processes at the start of each time slot of the network schedule, as is assigned to the processor operating system as soon as it is available. Lower-priority user processes gives precedence to the network processes when they become ready at the same time. However, when a user process is running on the processor, it is not pre-empted if a network process becomes ready during execution of the user process is.

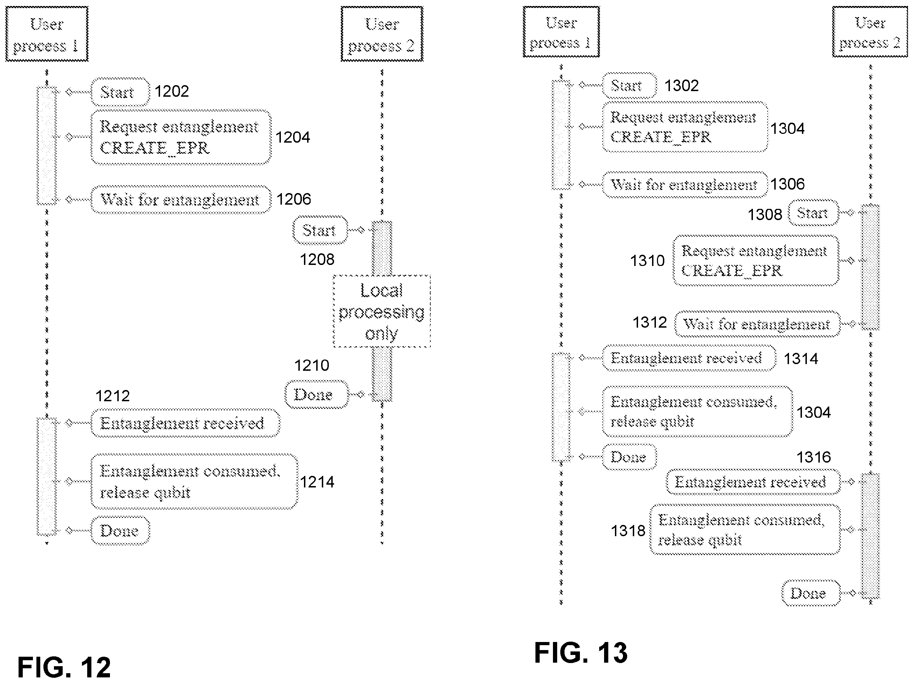

**Fig. 12** and **13** illustrate the concurrent execution of multiple user processes by a quantum network node operation system according to an embodiment. In particular, the figure illustrates executing multiple user applications concurrently by the operating system. Here, the different user processes may be relate to different quantum network applications. In particular, **Fig. 12** depicts a first example of a process flow wherein a first user process associated with a quantum code block is executed by the local subsystem of the quantum network node operating system (step **1202**)**.** During execution, a request for entanglement with a further quantum network node may be sent to the quantum network subsystem of the operating system (step **1204**), which will start preparing the entanglement generation as a background process, while the first user process is continued until it is blocked (step **1206**) because the first user process needs access to the entanglement.

While waiting for moment that the entanglement generation can be started, the scheduler may start the local subsystem to start execution of local quantum operations (step **1208**), i.e. operations not related to an entanglement generated, of a second user process, until the second user process has ended (step **1210**). When the scheduler determines that the further quantum network node is ready for the entanglement generation, then the scheduler may schedule execution of a network process (not shown) by the quantum network subsystem based on a timeslot of the network schedule in a similar way as described with reference to **Fig. 8****.** After establishment of the entanglement (step **1212**), the scheduler gives the processor back to the first user process, which may consume the entanglement, e.g. measure the communication qubit and release the communication qubit (step **1214**).

**Fig. 13** depicts a second example of example of a process flow which may start with a first user process associated with a first quantum code block associated with a first quantum network application is executed by the local subsystem of the quantum network node operating system (step **1302**). During execution, a request for a first entanglement with a further second quantum network node may be sent to the quantum network subsystem of the operating system (step **1304**), which will start preparing the first entanglement generation as a background process, while the first user process is continued until it is blocked (step **1306**) because the first user process needs access to the first entanglement.

While waiting for the first entanglement, the scheduler may start the local subsystem to start execution operations (step **1308**) of a second user process of a second quantum code block associated with a second quantum network application, which may include sending a request for a second entanglement with a further third quantum network node to the quantum network subsystem of the operating system (step **1310**), which will start preparing the second entanglement generation as a background process,

When the scheduler determines that the further second quantum network node is ready for the entanglement generation, then the scheduler may start a first network process (not shown) based on a first timeslot of the network schedule in a similar way as described with reference to **Fig. 8****.** After establishment of the first entanglement (step **1312**), the scheduler may give the processor back to the first user process, which may consume the first entanglement, e.g. measure the communication bit, and release of the communication qubit (step **1314**).

After release of the communication qubit, the scheduler may determine that the further third quantum network node is ready for the entanglement generation. In that case, the scheduler may start a second network process (not shown) based on a second timeslot of the network schedule and after establishment of the second entanglement (step **1316**), the scheduler gives the processor back to the second user process, which may consume the second entanglement, e.g. measure the communication bit, and release of the communication qubit (step **1318**).

The execution of the quantum network applications as described with reference to **Fig. 12** and **13** is in stark contrast to the executing of quantum applications that are executed on a conventional quantum computer which executes programs sequentially. For a conventional quantum computer without any networking capabilities, it is always better to execute all programs sequentially in batches to maximize the quantum execution quality. Any context switching or idle time will cause decoherence to visibly impact the qubit quality. However, a quantum network application may have to wait for some classical message exchange to happen between the programs running on different end-nodes to proceed. Such idle time will leave spare capacity that can be potentially used to execute other applications.

Further, it is noted that for multitasking to be useful, the quantum network nodes do not need to have much quantum memory available. For example, a "client" quantum network node may want to execute a computation on a remote "server" quantum network node for which it needs entanglement. However, if the "server" quantum network node is busy, the "client" quantum network node will have to wait for its turn. Meantime, other quantum network applications which may use the communication qubit to execute some local computation. Once it is time for entanglement to be generated with the server, the operating system may stop scheduling the local computations and schedules the network process. Such multitasking will lead to increased application throughput when compared to sequential execution without a significant impact on the quantum execution quality.

Within a quantum network, two types of node may be distinguished: end nodes, that run quantum networking user applications, and intermediate nodes, that perform those routines necessary to connect two or more end nodes. Both types of nodes are capable of executing quantum physical operations, as well as classical computing and networking tasks. The quantum network node operating system described with reference to the embodiments in this application may be used on both types of nodes. On intermediate nodes, its main responsibility is to multiplex the various quantum network requests, also called entanglement generation requests, originating from its neighbors into its underlying quantum physical hardware. End nodes may be configured to both manage the quantum hardware and to interface to the users of the node.

In an embodiment, a host system may be used to provide an interface to the user of the node. Typically, a host system may include a conventional computer including a conventional operating system for executing quantum network applications in a high-level programming language, e.g. Python or the like. Hence, the host system is only present on end nodes and represent an user environment where quantum networking applications are developed and compiled, and where application results are stored.The quantum network node operating system receives programs from the host system and entanglement generation requests from peer nodes, and arbitrates access to the quantum hardware, i.e. the physical quantum device, to multiplex quantum network applications and entanglement generation requests.

**Fig. 14** depicts a quantum network node system according to an embodiment. In particular, the figure depicts a quantum network node system comprising a number of modules including: a host system **1402,** which represents the user environment where quantum networking applications **1408** are developed, compiled, and run on a host runtime system. Further it may include storage memory for storing application results. A host system may be present if a quantum network node is configured as an end-node.

The system may further include quantum network node operating system **1404,** which may be configured to communicate with the host system through a host communication handler **1416** wherein the communication may include receiving quantum routines **1418,** in the form of a plurality of quantum code blocks. The quantum code blocks may be executed by the core **1418** which may include a quantum network subsystem **1424** (a quantum network stack) and a local subsystem **1426** (a local processor), The quantum network system is configured to prepare and execute entanglement generation requests, which also requires classical communication **1422** with other quantum network nodes. The operating system may be configured arbitrate access to the quantum physical device and to multiplex host applications and entanglement generation requests.

Further, the system may include a quantum device **1406,** the quantum device may include a processor configured to execute a quantum device processing stack **1430** for controlling the qubits which may include communication qubits and storage qubits and for controlling the interface to the qubits, such as a classical channel interface **1432** and quantum channel interface **1434.**

In an embodiment, the host system and the quantum network node operating system - while both being capable of performing non-quantum operations - may be separate components, wherein the quantum network node operating system is expected to meet real-time requirements and perform its arbitration tasks within set deadlines, whereas the host system does not need to provide such strict requirements. In an embodiment, the host system, quantum node operating system and quantum device may be implemented as physically different systems. Alternatively, some of these elements may be implemented or integrated on the same chip or board. In an embodiment, the host system may run one a general-purpose computer, while the quantum network node operation system may be implemented on a system on a chip SoC and a multitude of digital and analog controllers for the quantum device.

As shown in **Fig. 2** and **14****,** the quantum network node system may be part of a larger node system, and comprising interfaces to other components. In particular, the quantum network node system may include different external interfaces. For example, a quantum networking application running on a first host associated with a first quantum network node may communicate via host interface **1412** with another quantum network application running on a second host associated with second quantum network node. Similarly, entanglement generation requests originating from other nodes in the quantum network may be received on the quantum network stack through the interface of the quantum network stack interface **1422,** a subsystem of the operating system. Further, quantum instructions may be sent to the quantum device through the quantum device interface **1423.** Hence, an application may be processed at different levels including the host, the quantum network node operating system and on the quantum device.

A quantum networking user application, or program, may be written and programmed by programmer in a high-level language on the host, through the use of some SDK. Quantum network applications may include quantum routines - with real-time execution constraints - and possibly non-real-time pre- and postprocessing routines. A compiler may be used to split a user application into these two kinds of routines. The real-time quantum routines may form a quantum code block for execution by the quantum network node operating system, while other routines may be part of the host application.

The quantum code blocks may be expressed in a lower-level network quantum assembly language which the quantum network node operating system understands, wherein the instruction set of the quantum assembly language may include both computational and networking quantum instructions, as well as simple classical arithmetic and branching instructions which can be used for real-time processing by the operating system. It is the task of the compiler to transform high-level routines into quantum code blocks which can be executed by the quantum network node operating system. A quantum code block may be loaded onto quantum network node operating system through a host interface **1413.** On the other hand, classical routines belonging to the host application may be executed locally on the host. To that end, coordination between the quantum network node and the host of the user application may be required as well as (some) post-processing of the results.

Upon receiving quantum code block, the quantum network node operating system may create a user process to store application data and execution state. A process of the operating system is defined by the application routines - as produced by the compiler - and other run-time data analogous to what a typical process control block contains, useful for the execution of the application. Further, as depicted in **Fig. 14****,** a quantum routine may include different classes of instructions, including (but not limited to):
1. quantum operations **1419₁:** quantum physical operations, to be performed on the underlying quantum device;
2. classical logic **1419₃:** arithmetic and branch instructions, to be executed in-between quantum operations, useful to store results of quantum operations and to perform responsive decision-making;
3. entanglement generation requests **1419₂** , i.e. requests to generate an entangled qubit pair with a remote node in the network.

The quantum operations may be sent to the quantum device through the quantum device driver **1428,** which provides an abstraction of the quantum device interface **1423.** The classical logic may be processed locally on the quantum network node operating system, and potentially results in the update of a process's data. Entanglement generation requests may be forwarded to the quantum network stack **1424,** which in turn forwards them to the next hops, e.g. neighbouring quantum network nodes, on the path, and which stores them together with other requests coming from network peers.

Quantum physical operations may be executed on the quantum device **1406** which is configured as a quantum processing and networking unit. The implementation of the quantum device processing stack **1430** may depend on the underlying physical platform - for instance, nitrogen-vacancy (NV) centres, ion traps (IT), atomic ensembles (AE). Such platforms should be able to process both local quantum operations and entanglement generation requests. The quantum device may include (at least) two communication channels with its neighbours: a classical channel **1432,** used for low-level synchronization of the entanglement generation procedure and other configuration routines, and a quantum channel **1434,** where qubits - encoded in a physical medium like an electromagnetic wave-travel.

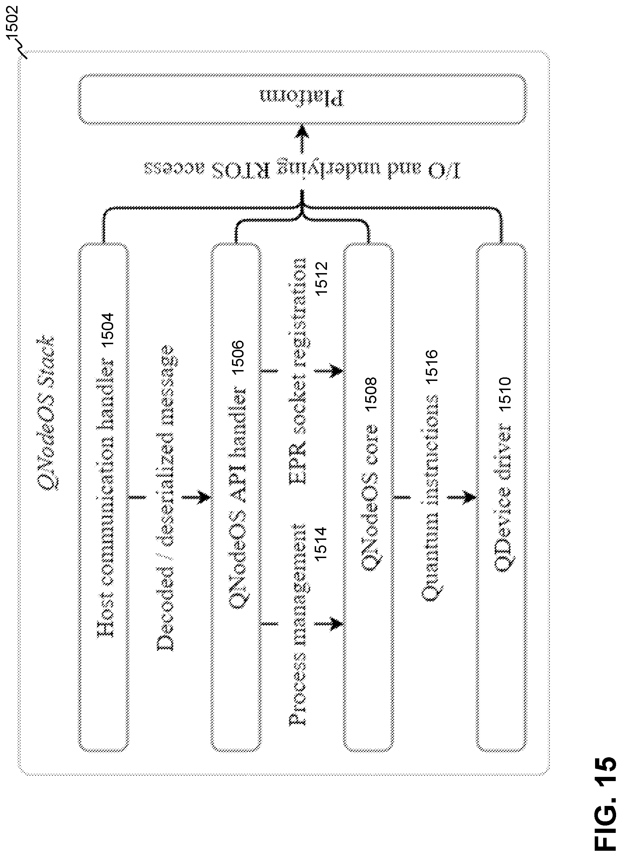

**Fig. 15** depicts a schematic of a quantum network node operating system stack according to an embodiment. In particular, the figure depicts layers of a quantum network node operating system **1500** which may define the stack of the quantum network node operating system, including the host communication handlers **1502,** an AIP handler **1504,** an operating system core **1506** and a quantum device driver **1508.**
The Host communication handler **1504** translates protocol-specific messages from the Host into API calls, which are subsequently processed by the AIP handler **1506** of the quantum network node operating system. The API handler is responsible for listening to system calls made to the operating system and to relay these calls to the appropriate component inside of the core of the operating system, which is a central engine that multiplexes user processes and network processes and manages the hardware resources of the quantum device. The API may be configured to execute the following steps:
1. register and deregister an application
2. add an application routine to the database of the process manager
3. open an entanglement generation socket, also referred to as EPR socket, with a remote node

The EPR socket may define the endpoint of an entanglement generation request, and is used by the quantum network stack to set up network tables and to establish connections with its peers.

The host communication handler may communicate with the host system based on a communication protocol and is configured to translate protocol-specific messages into API calls for the operating system. Similarly, the quantum device driver layer provides an abstraction of the quantum device, and its implementation depends on the nature of the quantum device and on the physical communication interface between the operating system and the quantum device.

Further, a vertical platform layer may provide SoC-specific abstractions for the operating system to access the physical resources of the platform it is implemented on, including I/O peripherals, interrupts controllers and timers. Additionally, if the quantum network node operating system is implemented on top of a lower-level operating system, this layer may give access to system calls to the underlying OS. The Platform layer is vertical in the sense that it can be accessed by all other layers of the.

As mentioned previously, the operating system receives and processes quantum network applications, wherein each quantum network application corresponds a user process, which is associated with an execution context, which may comprise quantum assembly language routines and other context information -t he process control block - including process ID, ownership of qubits, process state, scheduling priority, program counter, and pointers to process data structures. Here, process state and scheduling priority determine how processes are scheduled the operating system.

A kernel process is similar to a user process, but is created by the operating system statically, and its routines are generated at the operating system level as well. The network process associated with the quantum network stack is a kernel process that issues quantum instructions to satisfy entanglement requests coming from the network and from user applications.

Communication between the user process and the network includes the signalling of qubit ownership transfer, which is used when a process produces a qubit state which is to be consumed by another process. Typically, the network process transfers ownership of the entangled qubits that it produces to the user process which requested the EPR pairs.

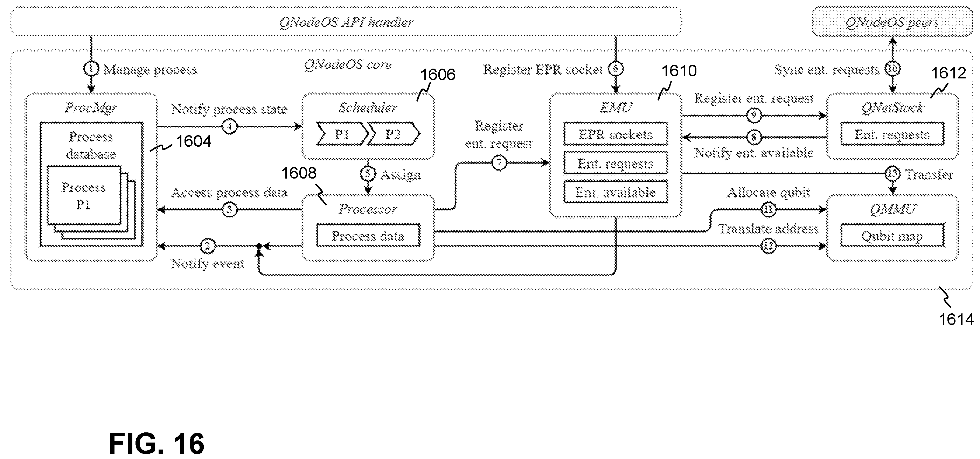

Most of the process handling of the operating system happens inside of the core layer of the operating system. **Fig. 16** depicts a schematic of the core layer of a quantum network node operation system according to an embodiment of the invention.
As shown in the figure, the core layer **1602** may include:
a. a process manager **1604** (ProcMgr), configured to manages access to processes;
b. a scheduler **1606** configured to select the next process to be run;
c. a processor **1608,** configured to processes routines' instructions;
d. an entanglement management unit **1610** (EMU), configured to maintain a list of entanglement requests and available entangled qubits;
e. a quantum network stack **1612** (QNetStack), configured to coordinate with peer nodes to schedule quantum networking instructions;
f. a quantum memory management unit **1614** (QMMU), configured to administer qubits allocated to processes.
The process manager marshals accesses to all user processes and kernel processes. The scheduler assigns ready processes to the processor, which runs quantum instructions through the underlying quantum device, processes (time critical) classical instructions locally, and registers entanglement generation requests with the entanglement management unit. The EMU maintains a list of EPR sockets and entanglement generation requests, forwards the entanglement generation requests to the quantum network stack, which, in turn, registers available entangled qubits with the EMU. The quantum memory management unit keeps track of used qubits, and transfers qubit ownership across processes when requested.

The process manager owns processes and marshals accesses to those. Creating a process, adding a routine to it and accessing the process's data must be done through the process manager. Additionally, the process manager is used by other components to notify events that occur inside the operating system, upon which the state of one of more processes is updated. Process state updates result in a notification to the scheduler. The process manager may include interfaces for the following services:
1. process management interface (interface 1 in **Fig. 16**) configured to create and remove processes, and to add routines to them. When a user registers an application, the API handler uses the program manager to create a user process. The program manager includes a database describing processes that are handled by the operating system, wherein each process is identified by an process ID. The returned process ID can be later used to add a routine to that process, or to remove the process once all its routines are fully processed.
2. event notification interface (interface 2 in **Fig. 16**) configured to notify an event occurred inside operating system, including the addition of a routine, the completion of a routine, the scheduling of the process, the hitting of a Wait condition, and the generation of an entangled qubit destined to the process. Some events may trigger follow-up actions - for instance, when a process that was waiting for an event becomes ready, it gets added to the queue of ready processes maintained by the scheduler.
3. process data access interface (interface 3 in **Fig. 16**) configured to access a process's routines and its classical memory space, mostly used while running the process (through the processor).

The scheduler registers processes that are ready to be scheduled, and assigns them to the processor when the latter is available. Ready processes are stored in a prioritized ready queue, and processes of the same priority may be scheduled with a first-come-first-served policy. The scheduler has one interface (interface 4 in **Fig. 16**) for process state notifications (idle, running, ready, waiting). When a process transitions to the ready state, it is directly added to the scheduler's prioritized ready queue. When a process becomes idle, or is waiting for an event to happen, the scheduler simply registers that the processor has become available.

The processor handles the execution of user and network processes, by running classical instructions locally and issuing quantum instructions to the quantum device driver. While executing a process, the processor reads its routines and accesses (reads and writes) its classical memory. The processor implements a specific instruction set architecture dictated by a quantum assembly language of choice. The processor exposes one interface for processor assignment (interface 5 in **Fig. 16**), used by the scheduler to activate the processor, when it is idling, and assign it to a process.

The entanglement management unit (EMU) contains a list of open EPR sockets and a list of entanglement generation requests, and keeps track of the available entangled qubits produced by the quantum network stack. Received entanglement generation requests may be considered valid only if an EPR socket associated to such requests exists. Valid requests are forwarded to the quantum network stack. Entangled qubit generations are notified as events to the process manager. The EMU has interfaces for the following services:
1. EPR socket registration (interface 6 in **Fig. 16**): to register and open EPR sockets belonging to an application, and to set up internal classical network tables and to establish classical network connection.
2. Entanglement request registration (interface 7 in **Fig. 16**): to add entanglement requests to the list of existing ones, to be used when matching produced entangled qubits with a process that requested them.
3. Entanglement notification (interface 8 in **Fig.16**): to register the availability of an entangled qubit, produced by the QNetStack, and to link it to an existing entanglement request.

A data link layer and network layer protocols may be part of the quantum network stack. The physical layer may be implemented on the quantum device and the application layer may be part of the host. The quantum network stack has an associated kernel process, created statically on the operating system. However, this process's routine is dynamic: the instructions to be executed on the processor may depend on the outstanding entanglement generation requests received from EMU and network peers. The quantum network stack has interfaces for the following services:
1. Entanglement request registration (interface 9 in **Fig.16**): to add entanglement requests coming from the EMU to the list of existing ones, which are used to fill in the QNetStack process's routine with the correct quantum instructions to execute.
2. Entanglement request synchronization (interface 10 in **Fig. 16**): similar to the entanglement request registration interface, but to be used to synchronize (send and receive) requests with QNodeOS network peers.
The quantum memory management unit (QMMU) may receive requests for qubit allocations from processes such as user processes and network processes, and manages the subsequent usage of those. It may also translates virtual qubit addresses into physical addresses for the quantum device, and keeps track of which process is using which qubit at a given time. A QMMU may take into account that the topology of a quantum memory determines what operations can be performed on which qubits, and thus allow processes to allocate qubits of a specific type upon request. A more advance QMMU may also include algorithms to move qubits in the background-that is, without an explicit instruction from a process's routine-to accommodate an application's topology requirements while not trashing the qubits being used by other processes. Such a feature could prove crucial to increase the number of processes that can be using the quantum memory at the same time, and to enhance multitasking performances. The QMMU may include the following interfaces:
1. qubit allocation and deallocation (interface 11 in **Fig.16**): a running process can ask for one or more qubits, which, if available, are allocated by the QMMU, and the physical addresses of those are mapped to the virtual addresses provided by the requesting process.
2. virtual address translation (interface 12 in **Fig. 16**): before sending quantum instructions to the quantum device driver, the processor may use virtual qubit addresses to retrieve physical addresses from the QMMU, and then replaces virtual addresses with physical addresses in the instructions for the quantum device driver.
3. Qubit ownership transfer (interface 13 in **Fig. 16**): qubits may only be visible to the process that allocates them. In some embodiments, however, a process may transfer some of its qubits to another process. A notable example is the quantum network process transferring an entangled qubit to the process that will use it.
As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated.

## Claims

1. A computer-implemented method for executing a quantum network application comprising classical code blocks and quantum code blocks on one or more quantum network nodes, each quantum network node including a classical host computer system configured to execute the classical code blocks and a quantum network processing unit connected to the host computer system, the quantum network processing unit being configured to execute the quantum code blocks and comprising one or more communication qubits and, optionally, one or more storage qubits, the method comprising:
receiving a quantum code block from a classical host computer of a first quantum network node by an operating system of the quantum network processing unit of the first quantum network node, the operating system being configured to control the execution of the quantum code blocks, the quantum code block comprising quantum operations, the quantum operations including local quantum operations not related to entanglement generation and at least an entanglement generation operation for entanglement generation between the first quantum network node and a second quantum network node, the first and second quantum network nodes being part of a quantum network;
executing the quantum operations of the quantum code block by a first subsystem of the operating system, wherein if a quantum operation relates to an entanglement generation operation, the entanglement generation operation being processed by a second subsystem of the operating system, the second subsystem being configured to prepare execution of the entanglement generation operation as a background process of the operating system, while the first subsystem continues executing local quantum operations; wherein the executing the quantum operations of the quantum code block further includes:
- blocking the execution of the local quantum operations of the quantum network application by the first subsystem, if a first local quantum operation requires access to an entanglement associated with the entanglement generation operation;
- executing the entanglement generation operation by the second subsystem based on a timeslot in a network schedule provided to the first and second quantum network node, preferably the entanglement generation operation being executed as a kernel process of the operating system;
- unblocking execution of the quantum operations by the first subsystem if entanglement between the first and second quantum network node is established; and,
- providing the local quantum operation access to a communication qubit of the quantum computing system of the first quantum network node that is entangled with a communication qubit of the quantum computing system of the second quantum network node.
receiving by the classical host computer a notification from the first quantum network processing unit that the execution of the quantum code block has ended and receiving from the first quantum network processing unit one or more execution results of the execution of the quantum code block, the one or more execution results including information about one or more measured entangled communication qubits and/or information about one or more stored entangled communication qubits; and,
executing by the classical host computer system a classical code block of the quantum network application based on the one or more execution results.

2. Method according to claim 1, wherein preparing execution of the first entanglement generation operation includes:
sending a request for entanglement over a classical communication link to the second quantum network node; or,
receiving a request for entanglement over a classical communication link from the second quantum network node.

3. Method according to claims 1 or 2 wherein the first and second quantum network nodes are connected to each other via an optical medium, preferably an optical fibre.

4. Method according to claims 1-3 wherein the network schedule includes one or more time slots for coordinating entanglement generation between the one or more quantum network nodes, preferably the one or more time slots of the network schedule signalling the operating system at what time the second subsystem has access to the quantum hardware of the quantum network node.

5. Method according to claims 1-4 wherein the local quantum operations are part of a user process and the entanglement generation operation by the second subsystem part of a network process.

6. Method according to claim 5, wherein the executing the entanglement generation operation including:
allocating the ownership of the communication that is used in the entanglement generation to the network process; and,
transferring the ownership of the communication qubit to the user process if entanglement between the communication qubit and a communication qubit of the second quantum network node is established.

7. Method according to any of claims 1-6 wherein the network schedule is time division multiplexing schedule, such as a TDMA schedule, or wherein the network schedule is statistical multiplexing schedule, preferably the network schedule being used by the operating system to schedule the user process and the network process according to a scheduling policy, preferably scheduling policy a network process takes precedence over a user process, if the user process and the network process become ready at the same time instance.

8. Method according to any of claims 1-7 wherein a central network controller provides the one or more quantum network nodes with a network schedule for coordinating entanglement between the quantum network nodes.

9. Method according to claims 1-8 wherein the quantum network application includes classical code blocks and quantum code blocks wherein the classical code blocks include classical operations of a high-level computer language and wherein the quantum code blocks include quantum operations of a quantum assembly language, preferably the quantum assembly language include one or more operations for entanglement generation.

10. Method according to any of claims 1-9 wherein during the blocking of the execution of the local quantum operations associated with a first quantum network application, executing local quantum operations associated with a second quantum network application.

11. A quantum network node system for executing a quantum network application comprising classical code blocks and quantum code blocks, the quantum network node system comprising a classical host computer system configured to execute the classical code blocks and a quantum network processing unit connected to the host computer system, the quantum network processing unit being configured to execute the quantum code blocks and comprising one or more communication qubits and, optionally, one or more storage qubits system, the classical computer system comprising a memory device including computer-executable instructions and a processor connected to the memory device, the processor and the quantum network processing unit being configured to perform executable operations comprising:
receiving a quantum code block from a classical host computer of a first quantum network node by an operating system of the quantum network processing unit of the first quantum network node, the operating system being configured to control the execution of the quantum code blocks, the quantum code block comprising quantum operations, the quantum operations including local quantum operations not related to entanglement generation and at least an entanglement generation operation for entanglement generation between the first quantum network node and a second quantum network node, the first and second quantum network nodes being part of a quantum network;
executing the quantum operations of the quantum code block by a first subsystem of the operating system, wherein if a quantum operation relates to an entanglement generation operation, the entanglement generation operation being processed by a second subsystem of the operating system, the second subsystem being configured to prepare execution of the entanglement generation operation as a background process of the operating system, while the first subsystem continues executing local quantum operations; wherein the executing the quantum operations of the quantum code block further includes:
- blocking the execution of the local quantum operations of the quantum network application by the first subsystem, if a first local quantum operation requires access to an entanglement associated with the entanglement generation operation;
- executing the entanglement generation operation by the second subsystem based on a timeslot in a network schedule provided to the first and second quantum network node, preferably the entanglement generation operation being executed as a kernel process of the operating system;
- unblocking execution of the quantum operations by the first subsystem if entanglement between the first and second quantum network node is established; and,
- providing the local quantum operation access to a communication qubit of the quantum computing system of the first quantum network node that is entangled with a communication qubit of the quantum computing system of the second quantum network node.
receiving by the classical host computer a notification from the first quantum network processing unit that the execution of the quantum code block has ended and receiving from the first quantum network processing unit one or more execution results of the execution of the quantum code block, the one or more execution results including information about one or more measured entangled communication qubits and/or information about one or more stored entangled communication qubits; and,
executing by the classical host computer system a classical code block of the quantum network application based on the one or more execution results.

12. A system according to claim 11 wherein the executable operations further comprise any of the methods steps according to claims 2-10.

13. Computer-implemented method for executing a quantum network application comprising classical code blocks and quantum code blocks on one or more quantum network nodes, each quantum network node including a classical host computer system configured to execute the classical code blocks and a quantum network processing unit connected to the host computer system, the quantum network processing unit being configured to execute the quantum code blocks and comprising one or more communication qubits and, optionally, one or more storage qubits, the method comprising:
executing a first classical code block by a classical host computer which is configured to communicate with a first quantum network processing unit, the execution including registering the quantum network application with an operating system of the first quantum network processing unit, the operating system being configured to control the execution of the quantum code blocks, the registration including registration information for resource requirements for the quantum network application, preferably registration information including a context, a bandwidth for entanglement generation, a socket identifying a second quantum network node and a fidelity associated with the execution of the quantum network application;
sending by the classical host computer a first quantum code block of the quantum network application to the first quantum network processing unit, the first quantum code block comprising quantum operations including local quantum operations not related to entanglement generation and one or more entanglement generation requests for entanglement generation between the first quantum network node and the second quantum network node; wherein the first quantum network processing unit is configured to execute the quantum operations of the first quantum code block using a first subsystem of the operating system, wherein if a quantum operation is related to an entanglement generation operation, the entanglement generation operation is processed by a second subsystem of the operating system, the second subsystem being configured to prepare execution of the entanglement generation operation as a background process of the operating system, while the first subsystem continues executing local quantum operations;
receiving by the classical host computer a notification from the first quantum network processing unit that the execution of the first quantum code block has ended and receiving from the first quantum network processing unit one or more execution results of the execution of the code block, the one or more execution results including information about one or more measured entangled communication qubits and/or information about one or more stored entangled communication qubits; and,
executing a second classical code block of the quantum network based on the one or more execution results.

14. Method according to claim 13 wherein the classical code blocks include classical operations of a high-level computer language and wherein the quantum code blocks include quantum operations of a quantum assembly language, preferably quantum assembly language comprising instructions for entanglement generation.

15. Method according to claims 13 or 14 further comprising:
sending a second quantum code block to the first quantum network node, wherein the second quantum code block comprises quantum operations for measuring one or more stored entangled qubits that were stored during the execution of the first quantum code block.

16. A computer program or suite of computer programs comprising at least one software code portion or a computer program product storing at least one software code portion, the software code portion, when run on a hybrid data processing system comprising a classical computer system and a quantum computer system, being configured for executing the method steps according any of claims 1-10 or 13-15.

## Patentansprüche

1. Ein computerimplementiertes Verfahren zum Ausführen einer Quantennetzwerkanwendung, die klassische Codeblöcke und Quantencodeblöcke aufweist, auf einem oder mehreren Quantennetzwerkknoten, wobei jeder Quantennetzwerkknoten ein klassisches Hostcomputersystem, das zum Ausführen der klassischen Codeblöcke ausgebildet ist, und eine mit dem Hostcomputersystem verbundene Quantennetzwerkverarbeitungseinheit aufweist, wobei die Quantennetzwerkverarbeitungseinheit zum Ausführen der Quantencodeblöcke ausgebildet ist und ein oder mehrere Kommunikationsqubits und optional ein oder mehrere Speicherqubits aufweist, wobei das Verfahren aufweist:
Empfangen eines Quantencodeblocks von einem klassischen Hostcomputer eines ersten Quantennetzwerkknotens durch ein Betriebssystem der Quantennetzwerkverarbeitungseinheit des ersten Quantennetzwerkknotens, wobei das Betriebssystem ausgebildet ist, die Ausführung der Quantencodeblöcke zu steuern, wobei der Quantencodeblock Quantenoperationen aufweist, wobei die Quantenoperationen lokale Quantenoperationen aufweisen, die nicht mit der Verschränkungserzeugung zusammenhängen, und zumindest eine Verschränkungserzeugungsoperation zur Verschränkungserzeugung zwischen dem ersten Quantennetzwerkknoten und einem zweiten Quantennetzwerkknoten, wobei der erste und der zweite Quantennetzwerkknoten Teil eines Quantennetzwerks sind;
Ausführen der Quantenoperationen des Quantencodeblocks durch ein erstes Teilsystem des Betriebssystems, wobei, wenn eine Quantenoperation sich auf eine Verschränkungserzeugungsoperation bezieht, wobei die Verschränkungserzeugungsoperation von einem zweiten Teilsystem des Betriebssystems verarbeitet wird, wobei das zweite Teilsystem ausgebildet ist, die Ausführung der Verschränkungserzeugungsoperation als Hintergrundprozess des Betriebssystems vorzubereiten, während das erste Teilsystem die Ausführung lokaler Quantenoperationen fortsetzt; wobei das Ausführen der Quantenoperationen des Quantencodeblocks ferner aufweist:
- Blockieren der Ausführung der lokalen Quantenoperationen der Quantennetzwerkanwendung durch das erste Teilsystem, wenn eine erste lokale Quantenoperation Zugriff auf eine Verschränkung erfordert, die der Verschränkungserzeugungsoperation zugeordnet ist;
- Ausführen der Verschränkungserzeugungsoperation durch das zweite Teilsystem basierend auf einem Zeitfenster in einem Netzwerkzeitplan, der dem ersten und dem zweiten Quantennetzwerkknoten bereitgestellt wird, wobei die Verschränkungserzeugungsoperation vorzugsweise als Kernelprozess des Betriebssystems ausgeführt wird;
- Aufheben der Blockierung der Ausführung der Quantenoperationen durch das erste Teilsystem, wenn die Verschränkung zwischen dem ersten und dem zweiten Quantennetzwerkknoten hergestellt ist; und
- Bereitstellen des Zugangs der lokalen Quantenoperation zu einem Kommunikationsqubit des Quantencomputersystems des ersten Quantennetzwerkknotens, das mit einem Kommunikationsqubit des Quantencomputersystems des zweiten Quantennetzwerkknotens verschränkt ist.

2. Verfahren nach Anspruch 1, wobei das Vorbereiten der Ausführung der ersten Verschränkungserzeugungsoperation aufweist:
Senden einer Verschränkungsanforderung über eine klassische Kommunikationsverbindung an den zweiten Quantennetzwerkknoten; oder
Empfangen einer Verschränkungsanforderung über eine klassische Kommunikationsverbindung von dem zweiten Quantennetzwerkknoten.

3. Verfahren nach Anspruch 1 oder 2, wobei der erste und der zweite Quantennetzwerkknoten über ein optisches Medium, vorzugsweise eine optische Faser, miteinander verbunden sind.

4. Verfahren nach den Ansprüchen 1- 3, wobei der Netzwerkzeitplan ein oder mehrere Zeitfenster zum Koordinieren der Verschränkungserzeugung zwischen dem einen oder den mehreren Quantennetzwerkknoten aufweist, wobei vorzugsweise der eine oder die mehreren Zeitfenster des Netzwerkzeitplans dem Betriebssystem signalisieren, zu welchem Zeitpunkt das zweite Teilsystem Zugriff auf die Quantenhardware des Quantennetzwerkknotens hat.

5. Verfahren nach den Ansprüchen 1- 4, wobei die lokalen Quantenoperationen Teil eines Benutzerprozesses sind und die Verschränkungserzeugungsoperation durch das zweite Teilsystem Teil eines Netzwerkprozesses ist.

6. Verfahren nach Anspruch 5, wobei das Ausführen der Verschränkungserzeugungsoperation aufweist:
Zuweisen des Eigentums an der Kommunikation, die bei der Verschränkungserzeugung verwendet wird, an den Netzwerkprozess; und
Übertragen des Eigentums an dem Kommunikationsqubit an den Benutzerprozess, wenn Verschränkung zwischen dem Kommunikationsqubit und einem Kommunikationsqubit des zweiten Quantennetzwerkknotens hergestellt ist.

7. Verfahren nach einem der Ansprüche 1- 6, wobei der Netzwerkzeitplan ein Zeitmultiplexzeitplan, beispielsweise ein TDMA-Zeitplan, ist oder wobei der Netzwerkzeitplan ein statistischer Multiplexzeitplan ist, wobei der Netzwerkzeitplan vorzugsweise vom Betriebssystem verwendet wird, um den Benutzerprozess und den Netzwerkprozess gemäß einer Zeitplanungsrichtlinie zu planen, wobei vorzugsweise die Zeitplanungsrichtlinie vorsieht, dass ein Netzwerkprozess Vorrang vor einem Benutzerprozess hat, wenn der Benutzerprozess und der Netzwerkprozess zum gleichen Zeitpunkt bereit sind.

8. Verfahren nach einem der Ansprüche 1-7, wobei eine zentrale Netzwerksteuerung dem einen oder den mehreren Quantennetzwerkknoten einen Netzwerkzeitplan zur Koordinierung der Verschränkung zwischen den Quantennetzwerkknoten bereitstellt.

9. Verfahren nach einem der Ansprüche 1-8, wobei die Quantennetzwerkanwendung klassische Codeblöcke und Quantencodeblöcke aufweist, wobei die klassischen Codeblöcke klassische Operationen einer höheren Computersprache aufweisen und wobei die Quantencodeblöcke Quantenoperationen einer Quantenassemblersprache aufweisen, wobei die Quantenassemblersprache vorzugsweise eine oder mehrere Operationen zur Verschränkungserzeugung aufweist.

10. Verfahren nach einem der Ansprüche 1-9, wobei während der Blockierung der Ausführung der lokalen Quantenoperationen, die einer ersten Quantennetzwerkanwendung zugeordnet sind, Ausführen lokaler Quantenoperationen, die einer zweiten Quantennetzwerkanwendung zugeordnet sind.

11. Ein Quantennetzwerkknotensystem zum Ausführen einer Quantennetzwerkanwendung, die klassische Codeblöcke und Quantencodeblöcke aufweist, wobei das Quantennetzwerkknotensystem ein klassisches Host-Computersystem, das zum Ausführen der klassischen Codeblöcke ausgebildet ist, und eine mit dem Host-Computersystem verbundene Quantennetzwerkverarbeitungseinheit aufweist, wobei die Quantennetzwerkverarbeitungseinheit zum Ausführen der Quantencodeblöcke ausgebildet ist und ein oder mehrere Kommunikationsqubits und optional ein oder mehrere Speicherqubits aufweist, wobei das klassische Computersystem eine Speichereinrichtung aufweist, die computerausführbare Anweisungen umfasst, und einen mit der Speichereinrichtung verbundenen Prozessor, wobei der Prozessor und die Quantennetzwerkverarbeitungseinheit so ausgebildet sind, dass sie ausführbare Operationen ausführen, die Folgendes umfassen:
Empfangen eines Quantencodeblocks von einem klassischen Hostcomputer eines ersten Quantennetzwerkknotens durch ein Betriebssystem der Quantennetzwerkverarbeitungseinheit des ersten Quantennetzwerkknotens, wobei das Betriebssystem so ausgebildet ist, dass es die Ausführung der Quantencodeblöcke steuert, wobei der Quantencodeblock Quantenoperationen aufweist, wobei die Quantenoperationen lokale Quantenoperationen, die nicht mit der Verschränkungserzeugung zusammenhängen, und zumindest eine Verschränkungserzeugungsoperation zur Verschränkungserzeugung zwischen dem ersten Quantennetzwerkknoten und einem zweiten Quantennetzwerkknoten aufweisen, wobei der erste und der zweite Quantennetzwerkknoten Teil eines Quantennetzwerks sind;
Ausführen der Quantenoperationen des Quantencodeblocks durch ein erstes Teilsystem des Betriebssystems, wobei, wenn eine Quantenoperation sich auf eine Verschränkungserzeugungsoperation bezieht, wobei die Verschränkungserzeugungsoperation von einem zweiten Teilsystem des Betriebssystems verarbeitet wird, wobei das zweite Teilsystem ausgebildet ist, die Ausführung der Verschränkungserzeugungsoperation als Hintergrundprozess des Betriebssystems vorzubereiten, während das erste Teilsystem die Ausführung lokaler Quantenoperationen fortsetzt; wobei das Ausführen der Quantenoperationen des Quantencodeblocks ferner aufweist:
- Blockieren der Ausführung der lokalen Quantenoperationen der Quantennetzwerkanwendung durch das erste Teilsystem, wenn eine erste lokale Quantenoperation Zugriff auf eine Verschränkung erfordert, die der Verschränkungserzeugungsoperation zugeordnet ist;
- Ausführen der Verschränkungserzeugungsoperation durch das zweite Teilsystem basierend auf einem Zeitfenster in einem Netzwerkzeitplan, der dem ersten und dem zweiten Quantennetzwerkknoten bereitgestellt wird, wobei die Verschränkungserzeugungsoperation vorzugsweise als Kernelprozess des Betriebssystems ausgeführt wird;
- Aufheben der Blockierung der Ausführung der Quantenoperationen durch das erste Teilsystem, wenn die Verschränkung zwischen dem ersten und dem zweiten Quantennetzwerkknoten hergestellt ist; und
- Bereitstellen des Zugangs der lokalen Quantenoperation zu einem Kommunikationsqubit des Quantencomputersystems des ersten Quantennetzwerkknotens, das mit einem Kommunikationsqubit des Quantencomputersystems des zweiten Quantennetzwerkknotens verschränkt ist,
Empfangen einer Benachrichtigung durch den klassischen Hostcomputer von der ersten Quantennetzwerkverarbeitungseinheit, dass die Ausführung des Quantencodeblocks beendet ist, und Empfangen von einem oder mehreren Ausführungsergebnissen der Ausführung des Quantencodeblocks von der ersten Quantennetzwerkverarbeitungseinheit, wobei das eine oder die mehreren Ausführungsergebnisse Informationen über ein oder mehrere gemessene verschränkte Kommunikationsqubits und/oder Informationen über ein oder mehrere gespeicherte verschränkte Kommunikationsqubits aufweisen; und
Ausführen eines klassischen Codeblocks der Quantennetzwerkanwendung durch das klassische Host-Computersystem basierend auf dem einen oder den mehreren Ausführungsergebnissen.

12. Ein System nach Anspruch 11, wobei die ausführbaren Operationen ferner einen der Verfahrensschritte gemäß den Ansprüchen 2 bis 10 aufweisen.

13. Computerimplementiertes Verfahren zum Ausführen einer Quantennetzwerkanwendung, die klassische Codeblöcke und Quantencodeblöcke aufweist, auf einem oder mehreren Quantennetzwerkknoten, wobei jeder Quantennetzwerkknoten ein klassisches Hostcomputersystem, das zum Ausführen der klassischen Codeblöcke ausgebildet ist, und eine mit dem Hostcomputersystem verbundene Quantennetzwerkverarbeitungseinheit aufweist, wobei die Quantennetzwerkverarbeitungseinheit zum Ausführen der Quantencodeblöcke ausgebildet ist und ein oder mehrere Kommunikationsqubits und optional ein oder mehrere Speicherqubits aufweist, wobei das Verfahren aufweist:
Ausführen eines ersten klassischen Codeblocks durch einen klassischen Hostcomputer, der so ausgebildet ist, dass er mit einer ersten Quantennetzwerkverarbeitungseinheit kommuniziert, wobei die Ausführung das Registrieren der Quantennetzwerkanwendung bei einem Betriebssystem der ersten Quantennetzwerkverarbeitungseinheit aufweist, wobei das Betriebssystem so ausgebildet ist, dass es die Ausführung der Quantencodeblöcke steuert, wobei die Registrierung Registrierungsinformationen für Ressourcenanforderungen für die Quantennetzwerkanwendung aufweist, vorzugsweise Registrierungsinformationen, die einen Kontext, eine Bandbreite für die Verschränkungserzeugung, einen Socket, der einen zweiten Quantennetzwerkknoten identifiziert, und eine Genauigkeit aufweisen, die der Ausführung der Quantennetzwerkanwendung zugeordnet ist;
Senden eines ersten Quantencodeblocks der Quantennetzwerkanwendung durch den klassischen Host-Computer an die erste Quantennetzwerkverarbeitungseinheit, wobei der erste Quantencodeblock Quantenoperationen aufweist, die lokale Quantenoperationen, die nicht mit der Verschränkungserzeugung zusammenhängen, und eine oder mehrere Verschränkungserzeugungsanforderungen für die Verschränkungserzeugung zwischen dem ersten Quantennetzwerkknoten und dem zweiten Quantennetzwerkknoten umfassen; wobei die erste Quantennetzwerkverarbeitungseinheit so ausgebildet ist, dass sie die Quantenoperationen des ersten Quantencodeblocks unter Verwendung eines ersten Teilsystems des Betriebssystems ausführt, wobei, wenn eine Quantenoperation mit einer Verschränkungserzeugungsoperation zusammenhängt, die Verschränkungserzeugungsoperation von einem zweiten Teilsystem des Betriebssystems verarbeitet wird, wobei das zweite Teilsystem so ausgebildet ist, dass es die Ausführung der Verschränkungserzeugungsoperation als Hintergrundprozess des Betriebssystems vorbereitet, während das erste Teilsystem die Ausführung lokaler Quantenoperationen fortsetzt;
Empfangen einer Benachrichtigung von der ersten Quantennetzwerkverarbeitungseinheit durch den klassischen Host-Computer, dass die Ausführung des ersten Quantencodeblocks beendet ist, und Empfangen eines oder mehrerer Ausführungsergebnisse der Ausführung des Codeblocks von der ersten Quantennetzwerkverarbeitungseinheit, wobei das eine oder die mehreren Ausführungsergebnisse Informationen über ein oder mehrere gemessene verschränkte Kommunikationsqubits und/oder Informationen über ein oder mehrere gespeicherte verschränkte Kommunikationsqubits aufweisen; und
Ausführen eines zweiten klassischen Codeblocks des Quantennetzwerks basierend auf dem oder den Ausführungsergebnissen.

14. Verfahren nach Anspruch 13, wobei die klassischen Codeblöcke klassische Operationen einer höheren Computersprache aufweisen und wobei die Quantencodeblöcke Quantenoperationen einer Quantenassemblersprache aufweisen, vorzugsweise einer Quantenassemblersprache, die Anweisungen zur Verschränkungserzeugung aufweist.

15. Verfahren nach den Ansprüchen 13 oder 14, ferner aufweisend:
Senden eines zweiten Quantencodeblocks an den ersten Quantennetzwerkknoten, wobei der zweite Quantencodeblock Quantenoperationen zum Messen eines oder mehrerer gespeicherter verschränkter Qubits aufweist, die während der Ausführung des ersten Quantencodeblocks gespeichert wurden.

16. Computerprogramm oder Suite von Computerprogrammen, die zumindest einen Softwarecodeabschnitt oder ein Computerprogrammprodukt aufweisen, das zumindest einen Softwarecodeabschnitt speichert, wobei der Softwarecodeabschnitt, wenn er auf einem hybriden Datenverarbeitungssystem ausgeführt wird, das ein klassisches Computersystem und ein Quantencomputersystem umfasst, das zum Ausführen der Verfahrensschritte gemäß einem der Ansprüche 1-10 oder 13-15 ausgebildet ist.

## Revendications

1. Procédé mis en œuvre par ordinateur pour exécuter une application de réseau quantique comprenant des blocs de code classiques et des blocs de code quantiques sur un ou plusieurs nœuds de réseau quantique, chaque nœud de réseau quantique comportant un système d'ordinateur hôte classique configuré pour exécuter les blocs de code classiques et une unité de traitement de réseau quantique connectée au système d'ordinateur hôte, l'unité de traitement de réseau quantique étant configurée pour exécuter les blocs de code quantiques et comprenant un ou plusieurs qubits de communication et, facultativement, un ou plusieurs qubits de stockage, le procédé comprenant :
la réception d'un bloc de code quantique à partir d'un ordinateur hôte classique d'un premier nœud de réseau quantique par un système d'exploitation de l'unité de traitement de réseau quantique du premier nœud de réseau quantique, le système d'exploitation étant configuré pour commander l'exécution des blocs de code quantiques, le bloc de code quantique comprenant des opérations quantiques, les opérations quantiques comprenant des opérations quantiques locales non liées à une génération d'enchevêtrement et au moins une opération de génération d'enchevêtrement pour une génération d'enchevêtrement entre le premier nœud de réseau quantique et un deuxième nœud de réseau quantique, les premier et deuxième nœuds de réseau quantique faisant partie d'un réseau quantique ;
l'exécution des opérations quantiques du bloc de code quantique par un premier sous-système du système d'exploitation, dans lequel si une opération quantique est liée à une opération de génération d'enchevêtrement, l'opération de génération d'enchevêtrement est traitée par un second sous-système du système d'exploitation, le second sous-système étant configuré pour préparer l'exécution de l'opération de génération d'enchevêtrement en tant que processus d'arrière-plan du système d'exploitation, tandis que le premier sous-système continue d'exécuter des opérations quantiques locales ;
dans lequel l'exécution des opérations quantiques du bloc de code quantique comporte en outre :
- le blocage de l'exécution des opérations quantiques locales de l'application de réseau quantique par le premier sous-système, si une première opération quantique locale nécessite l'accès à un enchevêtrement associé à l'opération de génération d'enchevêtrement ;
- l'exécution de l'opération de génération d'enchevêtrement par le second sous-système sur la base d'un créneau temporel dans un ordonnancement de réseau fourni au premier et au deuxième nœud de réseau quantique, de préférence l'opération de génération d'enchevêtrement étant exécutée en tant que processus noyau du système d'exploitation ;
- le déblocage de l'exécution des opérations quantiques par le premier sous-système si un enchevêtrement entre le premier et le deuxième nœud de réseau quantique est établi ; et,
- la fourniture à l'opération quantique locale d'un accès à un qubit de communication du système informatique quantique du premier nœud de réseau quantique qui est enchevêtré avec un qubit de communication du système informatique quantique du deuxième nœud de réseau quantique.
la réception par l'ordinateur hôte classique d'une notification provenant de la première unité de traitement de réseau quantique selon laquelle l'exécution du bloc de code quantique s'est terminée et la réception à partir de la première unité de traitement de réseau quantique d'un ou plusieurs résultats d'exécution de l'exécution du bloc de code quantique, les un ou plusieurs résultats d'exécution comportant des informations sur un ou plusieurs qubits de communication enchevêtrés mesurés et/ou des informations sur un ou plusieurs qubits de communication enchevêtrés stockés ; et,
l'exécution par le système d'ordinateur hôte classique d'un bloc de code classique de l'application de réseau quantique sur la base des un ou plusieurs résultats d'exécution.

2. Procédé selon la revendication 1, dans lequel la préparation de l'exécution de la première opération de génération d'enchevêtrement comporte :
l'envoi d'une demande pour un enchevêtrement sur une liaison de communication classique au deuxième nœud de réseau quantique ; ou,
la réception d'une demande pour un enchevêtrement sur une liaison de communication classique à partir du deuxième nœud de réseau quantique.

3. Procédé selon les revendications 1 ou 2 dans lequel les premier et deuxième nœuds de réseau quantique sont connectés l'un à l'autre via un support optique, de préférence une fibre optique.

4. Procédé selon les revendications 1 à 3 dans lequel l'ordonnancement de réseau comporte un ou plusieurs créneaux temporels pour coordonner une génération d'enchevêtrement entre les un ou plusieurs nœuds de réseau quantique, de préférence les un ou plusieurs créneaux temporels de l'ordonnancement de réseau signalant au système d'exploitation à quel moment le second sous-système a accès au matériel quantique du nœud de réseau quantique.

5. Procédé selon les revendications 1 à 4 dans lequel les opérations quantiques locales font partie d'un processus utilisateur et de l'opération de génération d'enchevêtrement par la partie de second sous-système d'un processus réseau.

6. Procédé selon la revendication 5, dans lequel l'exécution de l'opération de génération d'enchevêtrement comporte :
l'attribution de la propriété de la communication qui est utilisée dans la génération d'enchevêtrement au processus réseau ; et,
le transfert de la propriété du qubit de communication au processus utilisateur si un enchevêtrement entre le qubit de communication et un qubit de communication du deuxième nœud de réseau quantique est établi.

7. Procédé selon l'une quelconque des revendications 1 à 6 dans lequel l'ordonnancement de réseau est un ordonnancement de multiplexage par répartition dans le temps, tel qu'un ordonnancement TDMA, ou dans lequel l'ordonnancement de réseau est un ordonnancement de multiplexage statistique, de préférence l'ordonnancement de réseau étant utilisé par le système d'exploitation pour ordonnancer le processus utilisateur et le processus réseau selon une politique d'ordonnancement, de préférence une politique d'ordonnancement un processus réseau a la priorité sur un processus utilisateur, si le processus utilisateur et le processus réseau deviennent prêts en même temps.

8. Procédé selon l'une quelconque des revendications 1 à 7 dans lequel un dispositif de commande de réseau central fournit aux un ou plusieurs nœuds de réseau quantique un ordonnancement de réseau pour coordonner un enchevêtrement entre les nœuds de réseau quantique.

9. Procédé selon les revendications 1 à 8 dans lequel l'application de réseau quantique comporte des blocs de code classiques et des blocs de code quantiques dans lequel les blocs de code classiques comportent des opérations classiques d'un langage informatique de haut niveau et dans lequel les blocs de code quantiques comportent des opérations quantiques d'un langage d'assemblage quantique, de préférence le langage d'assemblage quantique comporte une ou plusieurs opérations pour une génération d'enchevêtrement.

10. Procédé selon l'une quelconque des revendications 1 à 9 dans lequel pendant le blocage de l'exécution des opérations quantiques locales associées à une première application de réseau quantique, l'exécution d'opérations quantiques locales associées à une seconde application de réseau quantique.

11. Système de nœuds de réseau quantique pour exécuter une application de réseau quantique comprenant des blocs de code classiques et des blocs de code quantiques, le système de nœuds de réseau quantique comprenant un système d'ordinateur hôte classique configuré pour exécuter les blocs de code classiques et une unité de traitement de réseau quantique connectée au système d'ordinateur hôte, l'unité de traitement de réseau quantique étant configurée pour exécuter les blocs de code quantiques et comprenant un ou plusieurs qubits de communication et, facultativement, un ou plusieurs systèmes de qubits de stockage, le système d'ordinateur classique comprenant un dispositif mémoire comportant des instructions exécutables par ordinateur et un processeur connecté au dispositif mémoire, le processeur et l'unité de traitement de réseau quantique étant configurés pour effectuer des opérations exécutables comprenant :
la réception d'un bloc de code quantique à partir d'un ordinateur hôte classique d'un premier nœud de réseau quantique par un système d'exploitation de l'unité de traitement de réseau quantique du premier nœud de réseau quantique, le système d'exploitation étant configuré pour commander l'exécution des blocs de code quantiques, le bloc de code quantique comprenant des opérations quantiques, les opérations quantiques comprenant des opérations quantiques locales non liées à une génération d'enchevêtrement et au moins une opération de génération d'enchevêtrement pour une génération d'enchevêtrement entre le premier nœud de réseau quantique et un deuxième nœud de réseau quantique, les premier et deuxième nœuds de réseau quantique faisant partie d'un réseau quantique ;
l'exécution des opérations quantiques du bloc de code quantique par un premier sous-système du système d'exploitation, dans lequel si une opération quantique est liée à une opération de génération d'enchevêtrement, l'opération de génération d'enchevêtrement est traitée par un second sous-système du système d'exploitation, le second sous-système étant configuré pour préparer l'exécution de l'opération de génération d'enchevêtrement en tant que processus d'arrière-plan du système d'exploitation, tandis que le premier sous-système continue d'exécuter des opérations quantiques locales ;
dans lequel l'exécution des opérations quantiques du bloc de code quantique comporte en outre :
- le blocage de l'exécution des opérations quantiques locales de l'application de réseau quantique par le premier sous-système, si une première opération quantique locale nécessite l'accès à un enchevêtrement associé à l'opération de génération d'enchevêtrement ;
- l'exécution de l'opération de génération d'enchevêtrement par le second sous-système sur la base d'un créneau temporel dans un ordonnancement de réseau fourni au premier et au deuxième nœud de réseau quantique, de préférence l'opération de génération d'enchevêtrement étant exécutée en tant que processus noyau du système d'exploitation ;
- le déblocage de l'exécution des opérations quantiques par le premier sous-système si un enchevêtrement entre le premier et le deuxième nœud de réseau quantique est établi ; et,
- la fourniture à l'opération quantique locale d'un accès à un qubit de communication du système informatique quantique du premier nœud de réseau quantique qui est enchevêtré avec un qubit de communication du système informatique quantique du deuxième nœud de réseau quantique.
la réception par l'ordinateur hôte classique d'une notification provenant de la première unité de traitement de réseau quantique selon laquelle l'exécution du bloc de code quantique s'est terminée et la réception à partir de la première unité de traitement de réseau quantique d'un ou plusieurs résultats d'exécution de l'exécution du bloc de code quantique, les un ou plusieurs résultats d'exécution comportant des informations sur un ou plusieurs qubits de communication enchevêtrés mesurés et/ou des informations sur un ou plusieurs qubits de communication enchevêtrés stockés ; et,
l'exécution par le système d'ordinateur hôte classique d'un bloc de code classique de l'application de réseau quantique sur la base des un ou plusieurs résultats d'exécution.

12. Système selon la revendication 11 dans lequel les opérations exécutables comprennent en outre l'une quelconque des étapes de procédé selon les revendications 2 à 10.

13. Procédé mis en œuvre par ordinateur pour exécuter une application de réseau quantique comprenant des blocs de code classiques et des blocs de code quantiques sur un ou plusieurs nœuds de réseau quantique, chaque nœud de réseau quantique comportant un système d'ordinateur hôte classique configuré pour exécuter les blocs de code classiques et une unité de traitement de réseau quantique connectée au système d'ordinateur hôte, l'unité de traitement de réseau quantique étant configurée pour exécuter les blocs de code quantiques et comprenant un ou plusieurs qubits de communication et, facultativement, un ou plusieurs qubits de stockage, le procédé comprenant :
l'exécution d'un premier bloc de code classique par un ordinateur hôte classique qui est configuré pour communiquer avec une première unité de traitement de réseau quantique, l'exécution comportant l'enregistrement de l'application de réseau quantique avec un système d'exploitation de la première unité de traitement de réseau quantique, le système d'exploitation étant configuré pour commander l'exécution des blocs de code quantiques, l'enregistrement comportant des informations d'enregistrement pour des exigences de ressources pour l'application de réseau quantique, de préférence des informations d'enregistrement comportant un contexte, une bande passante pour une génération d'enchevêtrement, une interface de connexion identifiant un deuxième nœud de réseau quantique et une fidélité associée à l'exécution de l'application de réseau quantique ;
l'envoi par l'ordinateur hôte classique d'un premier bloc de code quantique de l'application de réseau quantique à la première unité de traitement de réseau quantique, le premier bloc de code quantique comprenant des opérations quantiques comprenant des opérations quantiques locales non liées à une génération d'enchevêtrement et une ou plusieurs demandes de génération d'enchevêtrement pour une génération d'enchevêtrement entre le premier nœud de réseau quantique et le deuxième nœud de réseau quantique ;
dans lequel la première unité de traitement de réseau quantique est configurée pour exécuter les opérations quantiques du premier bloc de code quantique en utilisant un premier sous-système du système d'exploitation, dans lequel si une opération quantique est liée à une opération de génération d'enchevêtrement, l'opération de génération d'enchevêtrement est traitée par un second sous-système du système d'exploitation, le second sous-système étant configuré pour préparer l'exécution de l'opération de génération d'enchevêtrement en tant que processus d'arrière-plan du système d'exploitation, tandis que le premier sous-système continue d'exécuter des opérations quantiques locales ;
la réception par l'ordinateur hôte classique d'une notification provenant de la première unité de traitement de réseau quantique selon laquelle l'exécution du premier bloc de code de réseau quantique s'est terminée et la réception à partir de la première unité de traitement de réseau quantique d'un ou plusieurs résultats d'exécution de l'exécution du bloc de code, les un ou plusieurs résultats d'exécution comportant des informations sur un ou plusieurs qubits de communication enchevêtrés mesurés et/ou des informations sur un ou plusieurs qubits de communication enchevêtrés stockés ; et,
l'exécution d'un second bloc de code classique du réseau quantique sur la base des un ou plusieurs résultats d'exécution.

14. Procédé selon la revendication 13 dans lequel les blocs de code classiques comportent des opérations classiques d'un langage informatique de haut niveau et dans lequel les blocs de code quantiques comportent des opérations quantiques d'un langage d'assemblage quantique, de préférence un langage d'assemblage quantique comprenant des instructions pour une génération d'enchevêtrement.

15. Procédé selon les revendications 13 ou 14 comprenant en outre :
l'envoi d'un second bloc de code quantique au premier nœud de réseau quantique, dans lequel le second bloc de code quantique comprend des opérations quantiques pour mesurer un ou plusieurs qubits enchevêtrés stockés qui ont été stockés pendant l'exécution du premier bloc de code quantique.

16. Programme d'ordinateur ou suite de programmes d'ordinateur comprenant au moins une portion de code de logiciel ou produit programme d'ordinateur stockant au moins une portion de code de logiciel, la portion de code de logiciel, lorsqu'elle tourne sur un système de traitement de données hybride comprenant un système d'ordinateur classique et un système d'ordinateur quantique, étant configurée pour exécuter les étapes de procédé selon l'une quelconque des revendications 1 à 10 ou 13 à 15.
